# EUROPÄISCHE PATENTSCHRIFT

(11) **EP 3 404 569 B1**
(45) Veröffentlichungstag und Bekanntmachung des Hinweises auf die Patenterteilung: **24.03.2021**
(21) Anmeldenummer: 18172570.6
(22) Anmeldetag: 16.05.2018
(51) Int. Cl.: G06F 21/31

(54) **VERFAHREN, SYSTEM UND COMPUTERPROGRAMMPRODUKT ZUR VERHALTENSBASIERTEN AUTHENTIFIZIERUNG EINES NUTZERS**
METHOD AND SYSTEM FOR BEHAVIORAL AUTHENTICATION
PROCÉDÉ ET SYSTÈME D'AUTHENTIFICATION COMPORTEMENTALE

(30) Priorität: 16.05.2017 DE 102017208236
(43) Veröffentlichungstag der Anmeldung: 21.11.2018
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- US-A1- 2014 289 833
- FRANK M ET AL: "Touchalytics: On the Applicability of Touchscreen Input as a Behavioral Biometric for Continuous Authentication", IEEE TRANSACTIONS ON INFORMATION FORENSICS AND SECURITY, IEEE, PISCATAWAY, NJ, US, Bd. 8, Nr. 1, 26. Juli 2012 (2012-07-26), Seiten 136-148, XP011487920, ISSN: 1556-6013, DOI: 10.1109/TIFS.2012.2225048

## Beschreibung

Die Erfindung betrifft ein Verfahren, ein Kommunikationssystem, ein System und ein Computerprogrammprodukt zur verhaltensbasierten Authentifizierung eines Nutzers gegenüber einem Speichersystem mittels eines mobilen, tragbaren Kommunikationssystems.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst. Passwörter, die oftmals frei wählbar sind, sind entweder zu kurz und leicht zu merken, was jedoch den Nachteil hat, dass sie schneller zu erraten sind und somit nur ein geringes Maß an Sicherheit bieten. Passwörter, welche ein hohes Maß an Sicherheit bieten, sind demgegenüber oft lang und komplex, was es für den Nutzer schwierig macht sie sich zu merken.

In einer zunehmend digitalisierten Welt gewinnt eine permanente Verfügbarkeit von Daten zunehmend an Bedeutung. Viele mobile, tragbare Kommunikationssysteme lassen sich deshalb mit externen Speicherdiensten verbinden, um auf dort gespeicherte Daten von ein einem beliebigen Standpunkt aus zuzugreifen. Um die Verfügbarkeit von Daten zu erhöhen, werden beispielsweise sogenannte Cloud-Dienste in Anspruch genommen. Ein Cloud-Dienst ist ein Speicherdienst, welcher einen elektronischen Datenspeicher über ein Netzwerk zur Verfügung stellt. Speicher innerhalb eines Cloud-Speichersystems sind oftmals über mobile, tragbare Kommunikationssysteme ansteuerbar. Das mobile, tragbare Kommunikationssystem dient dabei als eine Art Schlüssel, der den Nutzer dazu befähigt den Speicherdienst in Anspruch zu nehmen.

Die Authentifizierung des Nutzers gegenüber dem Speichersystem kann dabei über die Authentifizierung des Nutzers gegenüber dem mobilen, tragbaren Kommunikationssystem oder gegenüber dem Speichersystem selbst erfolgen. Bei der Authentifizierung des Nutzers gegenüber dem mobilen, tragbaren Kommunikationssystem ist das mobile, tragbare Kommunikationssystem mit dem Speichersystem verbunden, sodass eine Authentifizierung des Nutzers gegenüber dem mobilen, tragbaren Kommunikationssystem gleichzeitig eine Authentifizierung gegenüber dem Speichersystem darstellt, ohne dass der Nutzer sich explizit gegenüber dem Speichersystem authentifizieren muss. Findet eine Authentifizierung des Nutzers gegenüber dem Speichersystem über das mobile, tragbare Kommunikationssystem statt so werden beispielsweise über das mobile, tragbare Kommunikationssystem ein Passwort, eine PIN oder ähnliche Authentifizierungsmittel eingegeben, die dem Nutzer den Zugriff auf das Speichersystem ermöglichen.

Um zu verhindern, dass unberechtigte Personen Zugriff auf den Speicher des Nutzers erlangen, ist ein solcher Speicher durch Anmeldedaten, also eine Kombination aus Anmeldename und Passwort, oder einem ähnlichen Mittel zu Authentifizierung geschützt. Die Verwaltung des Speichers und die Verwaltung der Anmeldedaten obliegt dabei dem Speicherdienstanbieter. Der Nutzer muss sich seine Anmeldedaten merken, um den Dienst in Anspruch nehmen zu können.

Die US 2014/0289833 A1 beschreibt ein Verfahren zur Durchführung fortgeschrittener Authentifizierungstechniken und zugehöriger Anwendungen. Das Verfahren umfasst: Empfangen einer Richtlinie, die einen Satz von akzeptablen Authentifizierungsfähigkeiten identifiziert, Bestimmen eines Satzes von Client-Authentifizierungsfähigkeiten, und Filtern des Satzes akzeptabler Authentifizierungsfähigkeiten basierend auf dem bestimmten Satz von Clientauthentifizierungsfähigkeiten, um zu einem gefilterten Satz von einer oder mehreren Authentifizierungsfähigkeiten zum Authentifizieren eines Benutzers des Clients zu gelangen.

Der Artikel "Touchalytics: On the Applicability of Touchscreen Input as a Behavioral Biometrie for Continuous Authentication" von M. Frank et al., IEEE Transactions on Information Forensics and Security, IEEE, Piscataway, NJ, US, Bd. 8, Nr. 1, 2013, Seiten 136-148, beschreibt eine kontinuierliche Nutzerauthentifizierung basierend auf einer Interaktion des Nutzers mit einem Touchscreen eines Smartphones. Es wird eine Reihe von verhaltensbasierten Berührungsmerkmalen beschrieben, die aus Touchscreenlog-Rohdaten extrahiert werden können, wobei unterschiedliche Nutzer in unterschiedliche Unterräume dieses Merkmalraums besiedeln. Es wird Rahmen für eine Klassifikation vorgeschlagen, in welchem das Berührungsverhalten eines Nutzers während einer Registrierungsphase erlernt und ein aktueller Nutzer akzeptieren oder ablehnen werden kann, indem Interaktionen mit dem Touchscreen überwacht werden.

Der Erfindung liegt demgegenüber die Aufgabe zugrunde, ein verbessertes Verfahren zur Authentifizierung eines Nutzers zu ermöglichen.

Die der Erfindung zugrundeliegende Aufgabe wird jeweils mit den Merkmalen der unabhängigen Patentansprüche gelöst. Ausführungsformen sind in den abhängigen Patentansprüchen angegeben.

Die Erfindung schlägt ein Verfahren und ein System zur verhaltensbasierten Authentifikation eines Nutzers vor, welche eine Authentifizierung ohne PIN oder Passwort ermöglichen. Die Grundlage der Authentifizierung ist ein individuelles intrinsisches Verhalten des Nutzers, welches durch eine Verhaltensweise oder eine Verhaltensgewohnheit des Nutzers definiert ist. Die verhaltensbasierte Authentifikation ermöglicht es dem Nutzer dadurch Zugriff auf einen Speicher eines Speichersystems zu erlangen, indem er sich so verhält, wie er es gewohnt ist. Der Nutzer muss sich daher kein Passwort, keine PIN, keine spezielle Geste oder ähnliche Authentifizierungsmittel merken. Alle grundlegenden Daten werden von dem Kommunikationssystem erfasst und alle grundlegenden Operationen werden von dem Kommunikationssystem beziehungsweise seinem Prozessor ausgeführt. Insbesondere sensible Daten, welche ein persönliches Verhalten des Nutzers wiederspiegeln, verbleiben ausschließlich in einem internen Speicher des Kommunikationssystems. Das in dem vorgeschlagenen Verfahren verwendete mobile, tragbare Kommunikationssystem weist mindestens einen Sensor zur Erfassung von nutzerbezogenen Daten auf. Die nutzerbezogenen Daten umfassen dabei Informationen bezüglich des Verhaltens des Nutzers. Das Verfahren zur Authentifizierung eines Nutzers des mobilen, tragbaren Kommunikationssystems gegenüber einem Speichersystem mittels einer verhaltensbasierten Authentifizierung umfasst nach Ausführungsformen die folgenden Schritte:
- Generieren mindestens eines Klassifikationsergebnisses unter Verwendung der nutzerbezogenen Daten für die verhaltensbasierte Authentifizierung,
- Auswerten des mindestens einen Klassifikationsergebnisses, um den Nutzer zu authentifizieren, wobei das Auswerten ein Prüfen umfasst, ob das Klassifikationsergebnis ein vorgegebenes Prüfungskriterium erfüllt, wobei eine erfolgreiche Authentifizierung ein erfüllen des Prüfungskriteriums umfasst,
- Erzeugen eines Authentifizierungssignals aufgrund des Ergebnisses der Auswertung des Klassifikationsergebnisses und Senden des Authentifizierungssignals an das Speichersystem,
- Erlangen von Zugriff auf den Speicher des Speichersystems, falls das Authentifizierungssignal eine erfolgreiche Authentifizierung des Nutzers angibt.

Das Speichersystem kann beispielsweise in dem Kommunikationssystem integriert sein oder als ein externes Speichersystem bereitgestellt sein, worauf das Kommunikationssystem über eine kommunikative Verbindung zugreifen kann. Ein externes Speichersystem kann beispielsweise durch einen Speicherdienstanbieter bereitgestellt sein. Ein Speichersystem kann ferner mehrere Speicher umfassen, welche durch mehrere Speicherdienstanbieter bereitgestellt werden. Die kommunikative Verbindung kann beispielsweise als Drahtlosverbindung oder als kabelgebundenen Verbindung ausgebildet sein. Der Zugriff des Kommunikationssystems auf das Speichersystem kann dabei beispielsweise über ein Netzwerk erfolgen, wobei das Netzwerk beispielsweise das Internet, ein Intranet und oder ein lokales Netzwerk umfasst.

Das Speichersystem kann beispielsweise einen eigenständigen Speicher, eine Mehrzahl von Speichern oder eine zu einem System zusammengeschaltete Mehrzahl von Speichern (RAID/ engl. "Redundant Array of Independent Disks"/ Redundante Anordnung unabhängiger Festplatten) umfassen. Ein RAID-System dient zur Organisation mehrerer physischer Massenspeicher wie beispielswiese Festplattenlaufwerke oder Solid-State-Drives zu einem logischen Laufwerk. Es kann im Vergleich zu einem einzelnen physischen Speichermedium eine höhere Ausfallsicherheit oder einen größeren Datendurchsatz ermöglichen. Die Mehrzahl von Speichern kann beispielsweise derart geschaltet sein, dass ein zweiter Speicher der Mehrzahl von Speichern einen ersten Speicher der Mehrzahl von Speichern spiegelt (RAID 1). In dieser Ausführungsform wird eine in dem ersten Speicher gespeicherte Datei automatisch auch in dem zweiten Speicher gespeichert. Der Speicherinhalt des ersten und des zweiten Speichers sind in diesem Fall identisch und können einander ersetzen. In einem zweiten Beispiel kann die Mehrzahl von Speichern derart geschaltet sein, dass eine zu speichernde Datei auf zwei oder mehr Speicher der Mehrzahl von Speichern aufgeteilt wird (RAID 0) und jeder Speicher einen Teil der Schreiboperationen übernimmt. Dadurch können zu speichernde Dateien schneller in das Speichersystem geschrieben werden, da die Teile bzw. Fragmente der Datei parallel geschrieben werden können.

Bei einer verhaltensbasierten Authentifizierung eines Nutzers wird zwischen zwei Typen von Nutzern unterschieden. Einerseits ist der registrierte Nutzer derjenige Nutzer, welcher erkannt werden soll. Andererseits ist der aktuelle Nutzer derjenige Nutzer, der das Kommunikationssystem aktuell bedienen bzw. benutzen möchte, bzw. der Zugriff auf das Speichersystem erlangen möchte. Kann der aktuelle Nutzer mit dem registrierten Nutzer durch den Authentifizierungsprozess identifiziert werden, so wird dem aktuellen Nutzer der Zugriff auf das Speichersystem gewährt. Stimmt der aktuelle Nutzer nicht mit dem registrierten Nutzer überein, so identifiziert das Kommunikationssystem den aktuellen Nutzer als eine andere, nicht nutzungsberechtigte Person und verweigert den Zugriff auf das Speichersystem. Im Folgenden wird mit "der Nutzer" der aktuelle Nutzer des Kommunikationssystems bezeichnet. Ist der registrierte Nutzer gemeint, ist dies explizit als "der registrierte Nutzer" gekennzeichnet.

Der registrierte Nutzer ist in dem Kommunikationssystem und/oder in dem Speichersystem registriert. Beispielsweise ist der Nutzer in dem Speichersystem registriert und in dem internen Speicher ist eine Kennung des registrierten Nutzers gespeichert, die den Nutzer als den registrierten Nutzer kennzeichnet. Zusammen mit dem Authentifizierungssignal wird die Kennung an das Speichersystem gesendet, wobei unter Verwendung des Authentifizierungssignals bestimmt wird, ob der Nutzer tatsächlich der registrierte Nutzer ist. In einem weiteren Beispiel ist der Nutzer in dem Kommunikationssystem registriert. Der Zugriff auf das Speichersystem wird dabei jedem Nutzer gewährt, der durch das Kommunikationssystem authentifiziert wird. Dabei können beispielsweise mehrere Nutzer in dem Kommunikationssystem registriert sein, die alle Zugriff auf das Speichersystem erlangen können, sofern das jeweilige Authentifizierungssignal Informationen einer erfolgreichen Authentifizierung umfasst.

Ein mobiles, tragbares Kommunikationssystem kann ein einzelnes eigenständiges Gerät oder mehrere mechanisch und/oder kommunikativ miteinander verbundene Geräte umfassen. Ein solches mobiles, tragbares Kommunikationssystem kann zum Beispiel umfassen: ein Smartphone, ein Tablet, einen Personal Digital Assistant, einen Pager, Smart-Glasses, eine Smart-Watch, ein Navigationsgerät, einen Activity Tracker, ein Gerät zur Erfassung medizinischer Daten, insbesondere physiologischer Daten wie ein Pulsmessgerät oder ein Blutdruckmessgerät. Die verhaltensbasierte Authentifizierung lässt sich von allen mobilen und tragbaren Geräten und Systemen ausführen, die in der Lage sind, elektronisch Daten zu verarbeiten und mindestens einen Sensor zur Erfassung von nutzerbezogenen Daten aufweisen.

Beispielhaft könnte ein mobiles, tragbares Kommunikationssystem ein Smartphone umfassen, wobei das Smartphone einen Sensor zur Erfassung einer grobmotorischen Bewegung des Gehens aufweist. Ferner kann ein zweites Kommunikationssystem ein Smartphone und eine Smart-Watch umfassen, wobei die Smart-Watch den Puls und den Blutdruck des Nutzers misst. Anhand eines Vergleichs der Daten, beispielsweise der Bewegungsdaten und/oder der biometrischen Daten, des Nutzers und des registrierten Nutzers kann der Nutzer als der registrierte Nutzer identifiziert werden oder nicht.

In einer Ausführungsform der Erfindung wird die verhaltensbasierte Authentifizierung von dem Kommunikationssystem durchgeführt, welches ein Klassifikationsmodul, einen Prozessor und einen internen Speicher aufweist, wobei die nutzerbezogenen Daten Bewegungsdaten einer grobmotorischen Bewegung des aktuellen Nutzers des Kommunikationssystems umfassen, wobei das Klassifikationsmodul zur Klassifikation des Verhaltens des aktuellen Nutzers anhand der nutzerbezogenen Daten konfiguriert ist, wobei das Klassifikationsmodul ferner zur Erkennung eines generischen grobmotorischen Bewegungsmusters mit Hilfe von Trainingsdatensätzen einer Nutzerkohorte trainiert ist, wobei das Klassifikationsmodul durch den Prozessor des Kommunikationssystems ausgeführt wird.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des mobilen, tragbaren Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen kann ebenso wie eine Armbewegung, um ein Mobiltelefon aus der Tasche zu ziehen, als grobmotorische Bewegung aufgefasst werden. Demgegenüber gilt ein Greifen einer Tasse als feinmotorische Bewegung, da die Bewegung zum Greifen mit den Fingern ausgeführt wird und feinere Muskelgruppen beansprucht. Dabei kann eine grobmotorische Bewegung insbesondere auch eine Hüftbewegung des Nutzers umfassen.

Ein jeder Mensch führt diese grobmotorischen Bewegungen auf seine eigene Art und Weise aus. Somit kann einem bestimmten Nutzer eines mobilen, tragbaren Kommunikationssystems ein ganz bestimmtes, charakteristisches grobmotorisches Bewegungsprofil zugeordnet werden. Anhand dieses Bewegungsprofils ist der Nutzer identifizierbar. Die durch den Bewegungssensor erfassten Daten werden einem solchen Bewegungsprofil zugeordnet. Das mobile, tragbare Kommunikationssystem ist ferner mit einem Klassifikationsmodul ausgestattet, welches dazu trainiert ist, die Bewegungsmuster des Nutzers zu erkennen.

Der Sensor des Kommunikationssystems kann ein interner Sensor zur Erfassung einer Bewegung des Kommunikationssystems sein (oder umfassen), wobei die Bewegung des Kommunikationssystems durch eine grob- und/oder feinmotorische Bewegung des aktuellen Nutzers des Kommunikationssystems verursacht wird, z. B. während der Nutzer das Kommunikationsgerät bei sich trägt. Die nutzerbezogenen Daten können Bewegungsdaten der Bewegung des Kommunikationssystems umfassen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welches zuvor ebenfalls trainiert wurde.

Ein solches mobiles, tragbares Kommunikationssystem weist zur Ausführung der verhaltensbasierten Authentifizierung eines Nutzers mindestens einen Sensor (z.B. einen internen Bewegungssensor des Kommunikationssystems) zur Erfassung von Daten einer grob- und/oder feinmotorischen Bewegung des Nutzers, ein Klassifikationsmodul, ein Betriebssystem bzw. eine Anwendung, einen Prozessor und einen internen Speicher auf. Der Sensor zur Erfassung der nutzerbezogenen Daten ist dazu konzipiert, eine grob- und/oder feinmotorische Bewegung des Nutzers zu erfassen, z.B. mittels einer Erfassung einer Bewegung des Kommunikationssystems, die durch die grob- und/oder feinmotorische Bewegung des Nutzers verursacht wird. Klassifikationsmodul ist für die Klassifikation der nutzerbezogenen Daten konfiguriert, auf das Erkennen einer grob- und/oder feinmotorischen Bewegung des Nutzers trainiert, implementiert ein Maschinenlernverfahren und wird durch den Prozessor des mobilen, tragbaren Kommunikationssystems ausgeführt, wobei das Betriebssystem bzw. die Anwendung dazu in der Lage ist den Zugriff auf das Speichersystem aufgrund des Erfolgs der Authentifizierung zu steuern.

Das durch das Klassifikationsmodul implementierte Maschinenlernverfahren bezeichnet ein Verfahren, mit dem das Klassifikationsmodul in der Lage ist, sich an den Nutzer des Kommunikationssystems anzupassen. Anpassen bezeichnet in diesem Sinne das Justieren und gegebenenfalls Neukonfigurieren von Klassifikationsparametern, anhand derer der Nutzer korrekt identifiziert werden kann. Das Maschinenlernverfahren ist nicht beschränkt auf einen bestimmten Algorithmus. Gemäß Ausführungsformen ist das Maschinenlernverfahren ein speziell für das maschinelle Lernen entwickelter Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Die verhaltensbasierte Authentifizierung eines Nutzers kann in zwei operative Abschnitte unterteilt werden. Abschnitt A umfasst ein wiederholtes Ausführen des Generierens eines Konfidenzwertes, wobei das Generieren des Konfidenzwertes die folgenden Schritte umfasst:
- Erfassen der nutzerbezogenen Daten durch den mindestens einen Sensor des Kommunikationssystems,
- Eingabe der Daten in das Klassifikationsmodul,
- Generieren mindestens eines ersten Konfidenzwertes durch das Klassifikationsmodul,
- Speichern des mindestens einen ersten Konfidenzwertes in dem Speicher des Kommunikationssystems,

Diese Schritte werden wiederholt ausgeführt, wodurch fortlaufend Konfidenzwerte generiert und in dem Speicher des Kommunikationssystems gespeichert werden.

Im zweiten Abschnitt der verhaltensbasierten Authentifizierung reagiert das mobile, tragbare Kommunikationssystem auf eine Authentifizierungsanfrage an ein für die Authentifizierung konfiguriertes Anwendungsprogramm. Eine Anwendung kann beispielsweise ein Anwendungsprogramm bzw. eine Applikation umfassen, welche auf dem mobilen, tragbaren Kommunikationssystem implementiert ist und/oder über das mobile, tragbare Kommunikationssystem gesteuert wird. Unter einem Anwendungsprogramm wird hier ohne Einschränkung jede Art von Computerprogramm verstanden, welches maschinenlesbare Instruktionen zur Steuerung einer Funktionalität eines Computers umfasst. Ein solches Anwendungsprogramm kann beispielsweise dazu konfiguriert sein eine nützliche oder gewünschte, nicht systemtechnische Funktionalität zu bearbeiten oder zu unterstützen.

Auf die Authentifizierungsanfrage hin greift der Prozessor des mobilen, tragbaren Kommunikationssystems auf den internen Speicher des Kommunikationssystems zu und liest mindestens einen ersten Konfidenzwert aus. Der mindestens eine erste Konfidenzwert wird dann verwendet, um ein Klassifikationsergebnis zu generieren. Dieses wird gegen ein bestimmtes, vordefiniertes Prüfungskriterium geprüft. Erfüllt das Klassifikationsergebnis das Prüfungskriterium, so wird gemäß einer Ausführungsform ein Authentifizierungssignal erzeugt, wobei das Authentifizierungssignal die Information des Erfolges der Authentifizierung des Nutzers umfasst und den Zugriff auf das Speichersystem gewährt. Wird das Prüfungskriterium durch das Klassifikationsergebnis nicht erfüllt, so wird dem Nutzer kein Zugriff auf das Speichersystem gewährt.

In einer Ausführungsform wird dem Nutzer so lange Zugriff auf das Speichersystem gewährt, wie er sich erfolgreich authentifizieren kann bzw. authentifiziert wird. Erst wenn das Authentifizierungssignal eine Information einer nicht-erfolgreichen Authentifizierung umfasst, wird dem Nutzer der Zugriff auf das Speichersystem verweigert.

Gemäß einer Ausführungsform werden die Daten durch den mindestens einen Sensor als Datenstrom (Stream) erfasst. Durch die Erfassung der Daten als Stream ergibt sich vorteilhafterweise eine maximal sensible Einteilung der ersten Konfidenzwerte pro Zeiteinheit. Es werden kontinuierlich Daten erfasst, welche kontinuierlich zu ersten Konfidenzwerten verarbeitet werden. Kontinuierlich bedeutet in diesem Zusammenhang, dass die Daten so oft erfasst werden, wie es der Takt des Prozessors und/oder des Sensors zulässt. Durch die kontinuierlich zur Verfügung stehenden Konfidenzwerte kann jederzeit ein Klassifikationsergebnis aus den zeitnah erzeugten Konfidenzwerten generiert werden, ohne dass das Kommunikationssystem erst abwarten muss, bis ein vorbestimmtes Messintervall abgelaufen und aktuelle Daten verarbeitet wurden. Ferner werden kontinuierlich neue erste Konfidenzwerte generiert, so dass bei einer Authentifizierungsanfrage aktuelle erste Konfidenzwerte zur Verfügung stehen, sofern sich der Nutzer in der nahen Vergangenheit bewegt hat.

In einer weiteren Ausführungsform wird der Abstand zwischen zwei oder mehreren Kommunikationsgeräten eines mobilen, tragbaren Kommunikationssystems aufgrund der Signalstärke des Signals der Drahtlosverbindung zwischen den Geräten ermittelt. Ein solches Drahtlosverbindungssignal kann beispielsweise ein Bluetooth-Signal, ein WLAN-Signal oder ein Funksignal sein. Der aus dem Drahtlosverbindungssignal ermittelte Abstand zwischen den Geräten kann gemäß dieser Ausführungsform als Teil der nutzerbezogenen Daten erfasst werden und zur verhaltensbasierten Authentifizierung des Nutzers verwendet werden.

Das Erfassen des Abstandes zweier Geräte eines Kommunikationssystems als Teil der nutzerbezogenen Daten und das Verwenden des Abstandes zur verhaltensbasierten Authentifizierung des Nutzers ermöglicht die Erhöhung der Sicherheit des Verfahrens zur verhaltensbasierten Authentifizierung, da ein weiterer Parameter durch einen unberechtigten Nutzer gefälscht bzw. nachgeahmt werden müsste, um Zugriff auf das Speichersystem zu erlangen.

Nach Ausführungsformen wird der Abstand dazu verwendet, um ein grobmotorisches Bewegungsmuster des Nutzers zu erkennen.

In einer weiteren Ausführungsform umfassen die nutzerbezogenen Daten ferner:
- Positionsdaten des Kommunikationssystems, welche durch ein Verfahren zur Positionsbestimmung durch einen Sensor zur Bestimmung der Position des Kommunikationssystems erfasst werden, und/oder
- Anwendungsnutzungsdaten des aktuellen Nutzers, wobei die Anwendungsnutzungsdaten Informationen über ein Nutzen von Anwendungsprogrammen durch den Nutzer umfassen, und/oder
- biometrischen Daten des aktuellen Nutzers, welche durch einen Sensor zur Erfassung von biometrischen Daten erfasst werden, und/oder
- Verbindungsdaten des Kommunikationssystems mit anderen Geräten und/oder
- Kalender- und/oder Uhrzeitdaten einer im Kommunikationssystem implementierten Uhr oder einer externen Uhr, deren Signal durch einen Sensor des Kommunikationssystems empfangen wird, und/oder
- Feinmotorische Bewegungsdaten des Nutzers, wobei die feinmotorischen Bewegungsdaten mittels eines Sensors zur Erfassung von feinmotorischen Bewegungsdaten oder mittels eines Eingabemittels erfasst werden, wobei das Klassifikationsmodul ferner zur Erkennung eines generischen feinmotorischen Bewegungsmusters mit Hilfe von Trainingsdatensätzen einer Nutzerkohorte trainiert ist.

Die Positionsdaten des Kommunikationssystems werden durch ein Verfahren zur Positionsbestimmung durch einen Positionssensor des Kommunikationssystems erfasst. Ein solches Verfahren kann zum Beispiel ein Erfassen eines Galileo- oder GPS-Signals, einer triangulierten Position aus WLAN-Verbindungsdaten oder Verbindungsdaten eines sonstigen Funknetzes umfassen, welches Funkzellen aufweist, wie etwa ein Mobilfunknetz.

Durch das Verwenden der Positionsdaten zur verhaltensbasierten Authentifikation des Nutzers ergibt sich in vorteilhafter Weise, dass ein regelmäßiger Aufenthaltsort des Nutzers (zum Beispiel zu Hause, bei der Arbeit oder an anderen Orten, die er regelmäßig aufsucht) erfasst wird. Ein unberechtigter Nutzer, insbesondere ein Dieb, der das mobile, tragbare Kommunikationssystem benutzt, wird sich in der Regel nicht an den Orten aufhalten, welche der registrierte Nutzer regelmäßig aufsucht. Dadurch ist das Kommunikationssystem in der Lage zu erkennen, ob der Nutzer der registrierte Nutzer ist. Damit können die Positionsdaten zur Verbesserung der verhaltensbasierten Authentifikation beitragen.

Die Anwendungsnutzungsdaten umfassen ein Anwendungsnutzungsverhalten des Nutzers, wobei das Anwendungsnutzungsverhalten Informationen umfasst, welche beschreiben, wann welche Anwendungen bzw. Anwendungsprogramme von dem Nutzer auf dem Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen der Anwendungsnutzungsdaten des Nutzers in das verhaltensbasierte Authentifizierungsverfahren steigt die Sicherheit des Verfahrens, da ein unberechtigter Nutzer, insbesondere ein Dieb, welcher das Kommunikationssystem gestohlen hat, auch das Anwendungsnutzungsverhalten des Nutzers imitieren müsste, um Zugriff auf das Speichersystem, welches einer Authentifizierung bedarf, zu erlangen.

Die biometrischen Daten können durch einen Sensor zur Erfassung von biometrischen Daten erfasst werden. Dabei können die biometrischen Daten unter anderem die Maße des Gesichts, die Fingerform, die Ohrmuschelform, das Retina- oder Irismuster, der Fingerabdruck eines Fingers oder physiologische Daten, wie zum Beispiel der Blutdruck oder der Puls des Nutzers, insbesondere bei spezifischen Aktivitäten wie dem Laufen, sein.

In einer Ausführungsform können die biometrischen Daten, insbesondere die Maße des Gesichts, das Iris- und/oder Retinamuster und die Ohrmuschelform, erfasst werden, wenn der Nutzer ohnehin sein Kommunikationssystem benutzt und/oder sich authentifizieren möchte. In dem Moment, in dem der Nutzer sein Kommunikationssystem benutzt und/oder sich authentifizieren möchte, kann je nach ausgeführter Anwendung davon ausgegangen werden, dass der Nutzer auf den Bildschirm des Kommunikationssystems schaut. Dies ist beispielsweise bei einer Chat- oder Nachrichtenanwendung der Fall. Da handelsübliche Smartphones und andere Systeme mit Kameras ausgestattet sind, welche auch auf der Seite des Bildschirms auf dem Kommunikationssystem positioniert sind, ist es möglich, dass eine Hintergrundanwendung des Kommunikationssystems ein Foto des Nutzers aufnimmt, während er das Kommunikationssystem benutzt. Dieses Foto kann ausgelesen und somit die biometrischen Daten des Nutzers erfasst werden. Sollte der Nutzer auf sein System zugreifen wollen, wird ein Foto erstellt oder es werden ein oder mehrere der zuletzt gespeicherten Fotos herangezogen und die biometrischen Daten, welche aus dem erstellten Foto bzw. den gespeicherten Fotos errechnet werden, zur Authentifizierung verwendet.

In einer weiteren Ausführungsform umfasst das mobile, tragbare Kommunikationssystem beispielsweise einen Drucksensor oder einen optischen Sensor zur Erfassung eines Pulsschlages, mit dem der Puls und der Blutdruck des Nutzers bestimmt werden können.

Durch die Verwendung eines direkt am Körper getragenen biometrischen Sensors, insbesondere einem biometrischen Sensor einer Smart-Watch, etwa einem Drucksensor oder optischem Sensor, ergibt sich in vorteilhafterweise, dass die biometrischen Daten ähnlich wie die grobmotorischen Bewegungsdaten kontinuierlich erfassbar sind, da der Nutzer die Smart-Watch während des regulären Gebrauchs an seinem Handgelenk trägt.

In einer weiteren Ausführungsform umfasst das Kommunikationssystem einen Sensor zur Erfassung eines Fingerabdrucks des Nutzers. In vorteilhaften Ausführungsformen ist der Sensor an Stellen des Kommunikationssystems positioniert, an denen der Nutzer mit seinen Fingerspitzen das Kommunikationssystem festhält und/oder zu Steuerung von Funktionen regelmäßig berührt.

Durch die Verwendung eines Fingerabdrucksensors, insbesondere an einer Stelle, an der sich während des regulären Gebrauchs die Fingerspitzen des Nutzers befinden, ergibt sich in vorteilhafter Weise, dass der Fingerabdruck, welcher für jeden Menschen einzigartig ist, als Identifikationsmerkmal des Nutzers zur Authentizitätsprüfung des Nutzers beiträgt und somit die Sicherheit des Verfahrens erhöht.

Durch die Verwendung der biometrischen Daten des Nutzers zur verhaltensbasierten Authentifizierung des Nutzers ergibt sich in vorteilhafter Weise, dass die Daten, welche zur Authentifizierung herangezogen werden, in hohem Maße von dem Nutzer abhängig sind. Insbesondere biometrische Daten bieten eine hohe Fälschungssicherheit, wodurch die Sicherheit der Authentifizierung gesteigert wird.

Die Verbindungsdaten des Kommunikationssystems mit anderen kommunikationsfähigen Geräten wie zum Beispiel Computern, kommunikationsfähigen Haushaltsgeräten oder einzelnen, mobilen, tragbaren Kommunikationsgeräten und -systemen können dazu verwendet werden, ein typisches Verbindungsmuster des Nutzers aufzuzeigen. So können zum Beispiel einzelne Geräte über WLAN, Bluetooth, Radio Frequency Identification (RFID), Near Field Communication (NFC) oder ein Kabel mit dem mobilen, tragbaren Kommunikationssystem verbunden werden. So kann für den Nutzer ein Verbindungsprofil angelegt werden, welches Informationen über die regelmäßigen Verbindungen des Kommunikationssystems mit weiteren Geräten enthält.

Beispielsweise kann ein Nutzer das Kommunikationssystem mit dem privaten WLAN einer Wohnung oder einem öffentlichen WLAN verbinden. In einer weiteren Ausführungsform verbindet der Nutzer das Kommunikationssystem mit Haushaltsgeräten und/oder einem Computer über das Internet oder ein Intranet, wodurch sich ein nutzerspezifisches Verbindungsprofil ergibt. Dieses Nutzungsprofil kann beispielsweise, ohne darauf beschränkt zu sein eine Waschmaschine, einen Trockner, einen Kühlschrank oder ähnliche Haushaltsgeräte, sowie Geräte eines Smart-Home-Systems, wie etwa Beleuchtung, Alarmanlage, Klimaanlage, Heizung, Audio-anlage(n), Video- bzw. Fernsehanlage(n), und/oder einen PC umfassen, welche der Nutzer zu Hause über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und ggf. Zugriff auf die Geräte besitzen muss, mit denen der registrierte Nutzer normalerweise das Kommunikationsgerät verbindet.

Durch die Verwendung der Verbindungsdaten zur verhaltensbasierten Authentifikation eines Nutzers ergibt sich in vorteilhafter Weise, dass der aktuelle Nutzer, welcher zum Beispiel eine Smartwatch trägt, sich über das Tragen der Smartwatch authentifizieren kann. Somit fungiert die Smartwatch als eine Art Schlüssel, welche den Zugriff auf das Speichersystem freigibt. Ein Dieb, welcher das mobile, tragbare Kommunikationssystem gestohlen hat, müsste also auch die Smartwatch in seinen Besitz bringen, um Zugriff auf das Speichersystem zu erlangen.

Kalender- und/oder Uhrzeitdaten können durch eine in dem Kommunikationssystem implementierte Uhr oder eine externe Uhr, deren Signal durch einen Sensor, insbesondere ein Funksignal durch einen Funksensor, des Kommunikationssystems empfangen wird, erfasst werden.

In einer weiteren Ausführungsform werden die Verbindungsdaten des Kommunikationssystems mit anderen Geräten und/oder die Positionsdaten des Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers ergibt sich in vorteilhafter Weise, dass insbesondere durch die Kommunikation mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein Kommunikationssystem liest. Die Verwendung der Kalender- und/oder Uhrzeitdaten haben somit eine erhöhte Sicherheit des Verfahrens zur Folge, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand und/oder Fingermuskulatur, aber auch den Muskeln des Mundes, der Augen und des Gesichtes. Die feinmotorische Bewegung, welche durch einen feinmotorischen Sensor des mobilen, tragbaren Kommunikationssystems erfasst wird, kann etwa eine bestimmte Bewegung der Finger umfassen.

In Ausführungsformen werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das Kommunikationssystem tätigt. Eine solche Eingabe kann beispielsweise, ohne darauf beschränkt zu sein, das Tippen von Wörtern bzw. Wischen von Wörtern, d.h. einem zu Tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung mit der der Nutzer eine Eingabe tätigt sein. Ferner können feinmotorischen Bewegungen Änderungen der Ausrichtung, wie etwa des Neigungswinkels, des Kommunikationssystems während der Nutzung umfassen.

Ein Sensor zur Erfassung einer feinmotorischen Bewegung kann als beispielsweise als optisches System oder als Touchpad bzw. Touchscreen, insbesondere, jedoch ohne darauf beschränkt zu sein, ein resistiver Touchscreen, ein oberflächenkapazitiver Touchscreen, ein projiziert-kapazitiver Touchscreen oder ein induktiver Touchscreen ausgebildet sein.

Durch das Verwenden einer feinmotorischen Bewegung eines Nutzers als zusätzlicher Authentifizierungsfaktor erhöht sich die Sicherheit der verhaltensbasierten Authentifizierung, da weitere Parameter zur Authentifizierung des Nutzers geprüft werden.

In einer weiteren Ausführungsform wird nach einem fehlgeschlagenen Authentifizierungsversuch der Nutzer dazu aufgefordert eine Eingabe in das mobile, tragbare Kommunikationssystem zu tätigen, um eine feinmotorische Bewegung des Nutzers erfassen zu können. Die Eingabe kann dabei beispielsweise das Nachmalen einer bestimmten Figur auf dem Bildschirm oder die Eingabe eines vordefinierten Wortes bzw. die Eingabe mehrerer Wörter umfassen. Die Wörter und/oder Muster können durch das System oder den Nutzer vordefiniert oder zufällig ausgewählt sein. Beispielsweise werden die entsprechenden Wörter und/oder Muster auf dem Bildschirm angezeigt.

Durch das Authentifizieren mittels einer feinmotorischen Bewegung im Falle einer fehlgeschlagenen Authentifizierung, ergibt sich vorteilhafterweise für den Nutzer die Möglichkeit sich trotz einer fehlgeschlagenen verhaltensbasierten Authentifizierung zu authentifizieren ohne dabei auf eine PIN oder ein Passwort zurückgreifen zu müssen.

In einer weiteren Ausführungsform ist in dem Speicher des mobilen, tragbaren Kommunikationssystems mindestens ein Muster in Form einer Musterfunktion und mindestens ein Vergleichsdatensatz gespeichert, wobei der Vergleichsdatensatz eine Mehrzahl der nutzerbezogenen Daten umfasst, wobei aus der Mehrzahl der nutzerbezogenen Daten des ersten Vergleichsdatensatzes mindestens ein erster Vergleichsparameter errechnet wird, wobei das Klassifikationsmodul auf die Eingabe der nutzerbezogenen Daten hin die folgenden Schritte ausführt:
- Bestimmen eines Klassifikationsparameters für jeden Parameter, den die nutzerbezogenen Daten umfassen, wobei das Bestimmen der Klassifikationsparameter aus den grobmotorischen Bewegungsdaten und/oder feinmotorischen Bewegungsdaten ein Vergleichen der erfassten grobmotorischen Bewegungsdaten und/oder feinmotorischen Bewegungsdaten mit der mindestens einen Musterfunktion, ein Zuordnen der nutzerbezogenen Daten zu dem der Musterfunktion zugeordneten ersten Muster und ein Erhalten von mindestens einem dem ersten Muster entsprechenden Klassifikationsparameter umfasst, falls die Bewegungsdaten dem mindestens einen, ersten Muster zugeordnet werden können,
- Errechnen eines ersten Konfidenzwertes für jeden Klassifikationsparameter durch einen Vergleich des mindestens einen Klassifikationsparameters mit dem jeweiligen Vergleichsparameter des Vergleichsdatensatzes.

Durch das Generieren des Klassifikationsergebnisses aus dem mindestens einen Konfidenzwert des mindestens einen Klassifikationsparameters ergibt sich vorteilhafterweise ein Verfahren, welches durch fest definierte Schritte für den Nutzer wiederholbar, jedoch für einen unberechtigten Nutzer sehr schwer zu umgehen ist. Ein Angreifer, welcher versucht mittels eines elektronischen Angriffs auf das Speichersystem zuzugreifen, in dem der Angreifer versucht die nutzerbezogenen Daten, den mindestens einen Klassifikationsparameter oder den mindestens einen Konfidenzwert zu erraten, um dem Speichersystem ein gefälschtes Klassifikationsergebnis vorzutäuschen, müsste die mindestens eine Musterfunktion kennen oder wissen, welche Klassifikationsparameter zu Konfidenzwerten verarbeitet werden und welche Werte diese aufweisen müssen, damit ein Zugriff auf das Speichersystem gewährt wird.

In einer Ausführungsform umfasst die verhaltensbasierte Authentifizierung ferner das Trainieren des Klassifikationsmoduls mit den nutzerbezogenen Daten des aktuellen Nutzers, wobei das Klassifikationsmodul auf das Verhalten des aktuellen Nutzers unter der Voraussetzung trainiert wird, dass gemäß dem Klassifikationsergebnis der aktuelle Nutzer ein registrierter Nutzer ist, wobei das Trainieren ein Hinzufügen der nutzerbezogenen Daten zu dem Vergleichsdatensatz umfasst, wobei das Trainieren ferner ein Entfernen der nutzerbezogenen Daten, welche Teil des ersten Vergleichsdatensatzes und ein vorgegebenes Mindestalter überschreiten, aus dem ersten Vergleichsdatensatz umfasst.

Durch das Speichern der nutzerbezogenen Daten in dem Speicher des Kommunikationssystems und das Hinzufügen der nutzerbezogenen Daten zu dem ersten Vergleichsdatensatz im Falle einer erfolgreichen Authentifizierung des Nutzers ergibt sich vorteilhafterweise ein rückgekoppeltes Trainieren des Klassifikationsmoduls. Der erste Vergleichsdatensatz und somit die Vergleichsparameter passen sich dem Verhalten des Nutzers an, wodurch das Verfahren gegenüber geringfügigen Verhaltensänderungen resistent wird bzw. sich diesen anpasst. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. Bei solchen und ähnlichen Verhaltensänderungen kann sich der Nutzer aufgrund des Speicherns der nutzerbezogenen Daten in dem Speicher des Kommunikationssystems und des Hinzufügens der nutzerbezogenen Daten zu dem ersten Vergleichsdatensatz auch weiterhin erfolgreich authentifizieren.

Das festgelegte Mindestalter für das Entfernen von nutzerbezogenen Daten aus dem ersten Vergleichsdatensatz kann beispielsweise Tage, Wochen, Monate oder Jahre betragen. Im Normalfall werden neue nutzerbezogene Daten gleichermaßen zu dem Vergleichsdatensatz hinzugefügt und gelöscht. Solange sich der Nutzer in regelmäßigen Abständen erfolgreich authentifiziert bleibt die Datenmenge des Vergleichsdatensatzes konstant bzw. in etwa konstant.

Falls sich der Nutzer jedoch über einen längeren Zeitraum nicht erfolgreich authentifiziert, beispielsweise weil er sein Kommunikationssystem nicht verwendet, so kann es vorkommen, dass alle Daten des Vergleichsdatensatzes das Mindestalter für die Löschung überschreiten und keine neuen nutzerbezogenen Daten in dem Vergleichsdatensatz gespeichert werden. Wird durch das Löschen der nutzerbezogenen Daten der erste Vergleichsdatensatz vollständig gelöscht, so wird gemäß einer weiteren Ausführungsform ein Signal erzeugt, welches dem Nutzer signalisiert, dass eine Authentifizierung über den gelöschten ersten Vergleichsdatensatz nicht länger möglich ist, bis entsprechende Vergleichsdaten wieder vorhanden sind, d.h. ein neuer erster Vergleichsdatensatz generiert wurde. Vergleichsdaten für einen solchen neuen ersten Vergleichsdatensatz können beispielsweise erfasst werden, indem sich der Nutzer nicht-verhaltensbasiert authentifiziert, beispielsweise über eine PIN oder ein analoges Verfahren, und im Voraus oder im Nachhinein so verhält, dass neue nutzerbezogene Daten erfasst und in dem Speicher des Kommunikationssystems gespeichert werden, womit die erfassten nutzerbezogenen Daten einen neuen ersten Vergleichsdatensatz bilden.

Durch das Löschen der nutzerbezogenen Daten bei Erreichen eines festgelegten Mindestalters der nutzerbezogenen Daten ergibt sich in vorteilhafter Weise, dass sich der erste Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete nutzerbezogene Daten, welche nicht mehr das aktuelle Verhalten des Nutzers korrekt wiederzugeben vermögen, vorsorglich gelöscht werden. Das Löschen von nutzerbezogenen Daten eines bestimmten Alters bewirkt somit, dass das Verhalten des Nutzers in der Vergangenheit, welches nicht notwendiger Weise mit dem Verhalten des Nutzers der Gegenwart übereinstimmen muss, keinen Einfluss auf die verhaltensbasierte Authentifizierung des Nutzers nimmt. Das Alter von nutzerbezogenen Daten bemisst sich beispielsweise ab dem Zeitpunkt der Erfassung und/oder Speicherung der nutzerbezogenen Daten.

In einer weiteren Ausführungsform werden die Vergleichsparameter neu berechnet und in dem Speicher des mobilen, tragbaren Kommunikationssystems gespeichert, wenn sich der erste Vergleichsdatensatz ändert.

In einer weiteren Ausführungsform werden die aus dem Vergleichsdatensatz entfernten nutzerbezogenen Daten in dem Speicher des Speichersystems gespeichert.

Das Speichern der aus dem Vergleichsdatensatz entfernten Daten in dem Speicher des Speichersystems bewirkt in vorteilhafter Weise, dass die in dem Speichersystem gespeicherten Daten als Back-up Daten genutzt werden können, falls das Kommunikationssystem und/oder die darauf gespeicherten Daten bzw. der darauf gespeicherte Vergleichsdatensatz dem Nutzer nicht zur Verfügung stehen. Ein Verlust, durch beispielsweise Diebstahl, würde ein solches nicht zur Verfügung stehen zur Folge haben. Ferner können die in dem Speichersystem gespeicherten Daten für eine langfristige Analyse des Nutzerverhaltens herangezogen werden, ohne dass für das Authentifizierungsverfahren irrelevante nutzerbezogene Daten, die das Mindestalter für die Löschung aus dem Vergleichsdatensatz überschritten haben, den Speicher des Kommunikationssystems belegen.

In einer weiteren Ausführungsform können die in dem Speicher des Speichersystems gespeicherten nutzerbezogenen Daten für eine von dem Authentifizierungsverfahren unabhängigen Auswertung verwendet werden. Beispielsweise können nutzerbezogene Daten anonymisiert für Verhaltens- und/oder Marktforschung oder für medizinische Zwecke verwendet werden.

In einer weiteren Ausführungsform werden die aktuellen nutzerbezogenen Daten in dem Speicher des Speichersystems gespeichert, falls sich der Nutzer erfolgreich authentifizieren konnte.

Das Speichern der aktuellen nutzerbezogenen Daten nach einer erfolgreichen Authentifizierung bewirkt in vorteilhafter Weise, dass die nutzerbezogenen Daten vollständig wiederhergestellt werden können, sollte das Kommunikationssystem verloren gehen, gestohlen werden oder auf den Speicher des Kommunikationssystems nicht zugegriffen werden kann. Ferner können die aktuellen nutzerbezogenen Daten von berechtigten dritten Personen genutzt werden, um beispielsweise aus dem Verhalten des Nutzers Rückschlüsse auf dessen Gesundheit oder dessen emotionalen Zustand zu ziehen.

In einer weiteren Ausführungsform werden die ersten Konfidenzwerte zu einem resultierenden Konfidenzwert durch den Prozessor des tragbaren Kommunikationssystems verarbeitet, wobei der resultierende Konfidenzwert eine Wahrscheinlichkeit angibt, mit der die Identität des aktuellen Nutzers mit der Identität des registrierten Nutzers übereinstimmt.

Durch die Bildung eines resultierenden Konfidenzwertes und die Verwendung des resultierenden Konfidenzwertes zur verhaltensbasierten Authentifizierung des Nutzers kann sich in vorteilhafter Weise ergeben, dass nur ein einziger Wert nötig ist, um den Nutzer zu authentifizieren.

In einer weiteren Ausführungsform sind die einzelnen ersten Konfidenzwerte der Klassifikationsparameter bei der Auswertung mit jeweils einem Gewichtungsfaktor versehen, wobei die Gewichtungsfaktoren dem jeweiligen ersten Konfidenzwert zugeordnet werden.

Durch das Verwenden von Gewichtungsfaktoren für die jeweiligen ersten Konfidenzwerte kann sich in vorteilhafter Weise eine Erhöhung der Genauigkeit des Prüfungsergebnisses ergeben. Die einzelnen Konfidenzwerte, die aus unterschiedlichen Klassifikationsparametern resultieren, können je nach Wichtigkeit und/oder Genauigkeit ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers. Ein erster Nutzer eines ersten Kommunikationssystems könnte beispielsweise regelmäßig eine Radioanwendung seines Kommunikationssystems nutzen, während ein zweiter Nutzer eines zweiten Kommunikationssystems niemals eine Radioanwendung nutzt. Durch die Möglichkeit des Gewichtens der einzelnen Konfidenzwerte kann dem Konfidenzwert für die Nutzung einer Radioanwendung für den ersten Nutzer ein höherer Gewichtungsfaktor zugewiesen werden, als dem zweiten Nutzer.

In einer weiteren Ausführungsform sind die Gewichtungsfaktoren der Konfidenzwerte durch das zu erfüllende Prüfungskriterium vorgegeben. Beispielsweise können die Gewichtungsfaktoren von der Art des angeforderten Zugriffs abhängen. So können das zu erfüllende Prüfungskriterium und damit die Gewichtungsfaktoren beispielsweise von der Art der angeforderten Datei bzw. der Art der zu speichernden Datei abhängen.

Durch das Vorgeben der Gewichtungsfaktoren durch das Prüfungskriterium ergibt sich in vorteilhafter Weise, dass unterschiedliche Konfidenzwerte individuell in Abhängigkeit davon gewichtet werden können, wie hoch der Sicherheitsgrad des Prüfungskriteriums ist. So können beispielsweise bei Prüfungskriterien, die einer sehr hohen Authentifizierungswahrscheinlichkeit bedürfen, alle Parameter miteinbezogen werden, wodurch alle ersten Konfidenzwerte zu einem resultierenden Konfidenzwert ausgelesen werden. Dem gegenüber werden bei einem Prüfungskriterium, welches einer niedrigen Sicherheitsstufe bedarf, nur einige oder ein einzelner Konfidenzwert, bzw. Klassifikationsparameter zur Auswertung herangezogen. Die Gewichtungsfaktoren nehmen dann eine Selektionsfunktion ein, mit der einzelne Parameter aus dem Authentifizierungsverfahren ausgeschlossen werden können, beispielsweise in dem der entsprechende Gewichtungsfaktor auf "Null" gesetzt wird.

In einer weiteren Ausführungsform sind die einzelnen Gewichtungsfaktoren der jeweiligen ersten Konfidenzwerte fest vorgegeben. Fest vorgegeben meint in diesem Zusammenhang, dass die Gewichtungsfaktoren von vornherein bei einer Erstinbetriebnahme des Kommunikationssystems festgelegt werden und keine Änderungen der Gewichtungsfaktoren während des bestimmungsmäßigen Betriebes des Kommunikationssystems vorgesehen sind.

Durch das Vorgeben der Gewichtungsfaktoren für die ersten Konfidenzwerte ergibt sich in vorteilhafter Weise ein reduzierter Rechenaufwand, welcher insbesondere für mobile, tragbare Kommunikationssysteme einen niedrigen Batterieverbrauch zur Folge hat. Das Kommunikationssystem muss nicht überprüfen, welche Gewichtungsfaktoren für welchen Konfidenzwert festzulegen sind, sondern letztendlich nur in seinem internen Speicher die entsprechenden Konfidenzwerte auslesen.

In einer weiteren Ausführungsform legt der Nutzer in einem Initiierungsprozess die Gewichtungsfaktoren der einzelnen ersten Konfidenzwerte selbst fest. Die festgelegten Gewichtungsfaktoren werden dann in einer Konfigurationsdatei in dem Speicher des Kommunikationssystems gespeichert.

Durch das Festlegen der Gewichtungsfaktoren durch den registrierten Nutzer selbst ergibt sich in vorteilhafter Weise, dass der registrierte Nutzer selbst bestimmen kann, inwieweit sein Verhaltensmuster zur verhaltensbasierten Authentifizierung beiträgt. Dies erhöht die Freiheit des registrierten Nutzers bei der Konfiguration des Kommunikationssystems, da der registrierte Nutzer selbst entscheiden kann, welche Klassifikationsparameter von seinem Verhaltensmuster umfasst werden. Zum Beispiel kann der registrierte Nutzer festlegen, dass das Verwenden der Radioanwendung nicht oder mit einem niedrigen Gewichtungsfaktor, von beispielsweise 0,01, 0,05 oder 0,1, in die Generierung des Klassifikationsergebnisses miteingehen soll, da er die Radioanwendung üblicherweise nur unregelmäßig nutzt. Der gleiche Nutzer könnte hingegen die ersten Konfidenzwerte der Positionsbestimmung stärker in die Generierung des Klassifikationsergebnisses miteinfließen lassen, da er einen sehr strukturierten Tagesablauf hat und sich mit hoher Regelmäßigkeit an bestimmten Orten aufhält.

In einer weiteren Ausführungsform ist das Prüfungskriterium erfüllt, wenn mindestens ein Klassifikationsergebnis einen durch das Prüfungskriterium vorgegebenen Schwellenwert überschreitet und/oder ein durch das Prüfungskriterium vorgegebenes Höchstalter des mindestens einen Klassifikationsergebnisses nicht überschritten wird.

Dadurch, dass das Prüfungskriterium darin besteht, dass mindestens ein Klassifikationsergebnis einen vorgegebenen Schwellenwert erreichen muss, ergibt sich in vorteilhafter Weise, dass die Prüfung des Klassifikationsergebnisses gegen das Prüfungskriterium durch den Vergleich von nur einem Wert mit dem Schwellenwert durchgeführt werden kann. Für diesen Schritt sind somit wenige Rechenoperationen notwendig, wodurch das Kommunikationssystem weniger Rechenoperationen ausführen muss. Somit ergibt sich für das Kommunikationssystem ein verringerter Energieverbrauch. Insbesondere für mobile, tragbare Kommunikationssysteme, welche durch eine Batterie betrieben werden, ist eine solche Ausführungsform vorteilhaft. Der Schwellenwert kann beispielsweise eine Wahrscheinlichkeit von 80%, von 90% oder 99% umfassen, mit der der Nutzer als der registrierte Nutzer identifiziert wird.

Das vorgegebene Höchstalter hat zur Folge, dass nur ein aktuelles Klassifikationsergebnis für die erfolgreiche Authentifizierung verwendet werden kann. Ein aktuelles Klassifikationsergebnis bezeichnet ein Klassifikationsergebnis, welches jünger als das vorgegebene Höchstalter ist. Durch das Festlegen des Höchstalters kann so festgelegt werden, wie jung das Klassifikationsergebnis sein muss. Dies schützt die in dem Speicher des Speichersystems gespeicherten Daten vor einem unberechtigten Zugriff durch einen Nutzer, der beispielsweise versucht sich mittels eines zuvor ausgespähten Klassifikationsergebnisses zu authentifizieren. Das vorgegebene Höchstalter kann beispielsweise einige Sekunden, einige Minuten oder eine Stunde umfassen.

In einer Ausführungsform ist das Prüfungskriterium erfüllt, wenn mehrere Klassifikationsergebnisse einen durch das Prüfungskriterium vorgegebenen Schwellenwert überschreiten und/oder ein durch das Prüfungskriterium vorgegebenes Höchstalter der mehreren Klassifikationsergebnisse nicht überschritten wird.

Die Bedingung, dass das Prüfungskriterium von mehreren Klassifikationsergebnissen erfüllt sein muss erhöht die Sicherheit des Verfahrens, da eine Person ohne Zugriffsrechte mehrere Klassifikationsergebnisse fälschen müsste, um Zugriff auf den Speicher des Speichersystems zu erlangen.

In einer weiteren Ausführungsform muss sich der Nutzer des Kommunikationssystems bei einer Erstinbetriebnahme des Speichersystems für eine Nutzung des Speichersystems registrieren.

Eine Registrierung des Nutzers für die Nutzung des Speichersystems bei der Erstinbetriebnahme des Speichersystems kann beispielsweise eine Eingabe eines Einmal-Passworts bzw. einer Initialisierungs-PIN umfassen, welche einem berechtigten Nutzer beispielswiese im Zuge eines rechtmäßigen Erwerbs des Kommunikationssystems oder beispielsweise durch erlangen von Nutzungsrechten mittels eines Erwerbs einer Lizenz zur Nutzung des Speichersystems zur Verfügung gestellt wird. Nach weiteren Ausführungsformen kann die Registrierung bei der Erstinbetriebnahme beispielsweise auch eine Eingabe bzw. ein Senden eines initialen Registrierungstokens an das Speichersystem umfassen. Das initiale Registrierungstoken kann beispielswiese von einem zentralen Registrierungsservice bereitgestellt werden, demgegenüber sich der Nutzer als berechtigter Nutzer authentifiziert hat.

Durch das Registrieren bei der Erstinbetriebnahme des Speichersystems ergibt sich somit in vorteilhafter Weise, dass nur der registrierte Nutzer das Kommunikationssystem für einen Zugriff auf das Speichersystem nutzen kann. Nach Ausführungsformen erfolgt im Falle einer Erstinbetriebnahme nach und/oder zusammen mit der zuvor genannten Registrierung des berechtigten Nutzers, falls diese erfolgreich ist, beispielsweise eine automatische Personalisierung des untrainierten mobilen, tragbaren Kommunikationssystems auf den berechtigten Nutzer. Im Zuge der Registrierung und/oder danach werden nutzerbezogene Daten für eine verhaltensbasierte Authentifizierung des berechtigten Nutzers erfasst und zu dem Vergleichsdatensatz hinzugefügt bzw. wird der Vergleichsdatensatz erstellt. Somit wird das Klassifikationsmodul auf den entsprechenden Nutzer trainiert, d.h. das mobile, tragbare Kommunikationssystem wird personalisiert. Schlägt die zuvor genannte Registrierung des berechtigten Nutzers fehl, so werden beispielsweise keine nutzerbezogenen Daten erfasst oder erfasste nutzerbezogenen Daten werden nicht zu dem Vergleichsdatensatz hinzugefügt.

Durch das Personalisieren des mobilen, tragbaren Kommunikationssystems nach der Erstinbetriebnahme des Speichersystems aufgrund eines entsprechenden Signals ergibt sich in vorteilhafter Weise, dass der Nutzer das Verfahren zur verhaltensbasierten Authentifizierung möglichst früh anwenden kann. Das Personalisieren nach der Erstinbetriebnahme umfasst dabei das Erfassen von Daten, um daraus den entsprechenden Vergleichsdatensatz aufzubauen.

Beispielsweise sendet das Kommunikationssystem nach der Erstinbetriebnahme des Speichersystems ein Signal an den aktuellen Nutzer, welches eine Aufforderung zu einer Personalisierung des Kommunikationssystems durch eine Generierung des mindestens einen Vergleichsdatensatzes durch den aktuellen Nutzer umfasst. Beispielsweise wird der Nutzer aufgefordert mit dem mobilen, tragbaren Kommunikationsgerät zu laufen oder zu gehen.

In einer weiteren Ausführungsform sind auf dem Kommunikationssystem mehrere Nutzer für die Nutzung des Speichersystems registriert und ein Klassifikationsergebnis wird für jeden Nutzer generiert, wobei das Klassifikationsmodul dazu konfiguriert ist den aktuellen Nutzer als einen der registrierten Nutzer zu identifizieren.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, wobei die Mehrzahl von Mitarbeitern, welche das jeweilige mobile, tragbare Kommunikationssystem abwechselnd benutzen, das Verfahren zur verhaltensbasierten Authentifizierung anwenden können. Dabei können mehrere Nutzer beispielsweise auf einen oder mehrere Speicherbereiche gemeinsam zugreifen und sich gemeinsamen Speicherplatz teilen. Ferner kann für jeden oder einzelne Nutzer beispielsweise ein eigener individueller Speicherbereich innerhalb des Speichersystems vorgesehen sein. Ein Speicherbereich kann dabei beispielsweise einen Teil eines Speichers des Speichersystems, einen vollständigen Speicher des Speichersystems, mehrere Teile von verschiedenen Speichern des Speichersystems und/oder mehrere Speicher des Speichersystems umfassen.

In einer weiteren Ausführungsform das Klassifikationsmodul konfiguriert ist einen Nutzerwechsel anhand einer grob- und/oder feinmotorischen Bewegung zu erkennen, wobei die verhaltensbasierte Authentifizierung ferner umfasst:
- Wiederholtes Ausführen der Schritte:
   - Generieren mindestens eines zweiten Konfidenzwertes durch das Klassifikationsmodul,
   - Speichern des mindestens einen zweiten Konfidenzwertes in dem Speicher des Kommunikationssystems,
- Zugreifen auf den Speicher des Kommunikationssystems, um mindestens einen der gespeicherten zweiten Konfidenzwerte aus dem Speicher auszulesen,
- Auswerten des mindestens einen zweiten Konfidenzwertes, um zu überprüfen, ob ein Nutzerwechsel stattgefunden hat,
   Verwerfen der bisherigen Konfidenzwerte, falls ein Nutzerwechsel stattgefunden hat.

In einer weiteren Ausführungsform ist das Klassifikationsmodul so konfiguriert, dass es eine zumindest vorübergehende Beendigung der Nutzung des Kommunikationssystems durch den aktuellen Nutzer anhand von grob- und/oder feinmotorischen Daten erkennt. Dazu ist das Klassifikationsmodul beispielsweise auf ein Erkennen einer grob- und/oder feinmotorischen Bewegung des Ablegens des Kommunikationssystems konfiguriert. Wird eine solche Beendigung erkannt, werden beispielsweise die bisherigen Konfidenzwerte verworfen, um sicherzustellen, dass bei einem möglichen Nutzerwechsel ein nicht authentifizierter Nutzer das Kommunikationssystem verwendet. Dieser nicht authentifizierte Nutzer muss sich dann neu authentifizieren.

In einer weiteren Ausführungsform kommunizieren das Speichersystem und das Kommunikationssystem über eine kryptographisch gesicherte und/oder verschlüsselte Drahtlosverbindung. Die Drahtlosverbindung kann beispielsweise als eine Verbindung über Bluetooth, kabelloses, lokales Netzwerk (WLAN), Radio Frequency Identification (RFID) oder Near Field Communication (NFC) ausgebildet sein. Die kryptographische Sicherung kann das Austauschen von Zertifikaten, ein Challenge-Response-Verfahren oder andere geeignete Verfahren zur kryptographischen Sicherung umfassen. Die Verschlüsselung kann eine symmetrische oder eine asymmetrische Verschlüsselung umfassen.

Durch die Verbindung des Kommunikationssystems mit dem Speichersystem über eine kryptographisch gesicherte und/oder verschlüsselte Drahtlosverbindung ergibt sich in vorteilhafter Weise, dass der Nutzer sein Kommunikationssystem auf eine einfache Weise mit dem Speichersystem verbinden kann. Es ist keine feste Kabelverbindung erforderlich und der Nutzer kann von einem beliebigen Punkt aus eine Verbindung zu dem Speichersystem herstellen, solange er sich innerhalb einer Reichweite der Drahtlosverbindung oder einem Netzwerk, bzw. einem virtuellen Netzwerk, mit dem Speichersystem befindet.

In Ausführungsformen umfasst das Speichersystem mehrere Speicher und einen Dateimanagementserver, wobei zumindest eine Datei von dem Kommunikationssystem auf die Speicher des Speichersystems verteilt gespeichert wurde, wobei das verteilte Speichern umfasst:
- automatische Generierung eines Verteilungsplans, der Instruktionen zur Generierung von Dateifragmenten der Datei mittels eines Fehlerkorrekturverfahrens und Identifikatoren der mehreren Speicher des Speichersystems, in denen die generierten Dateifragmente gespeichert werden sollen, enthält, durch den Dateimanagementserver oder durch das Kommunikationssystem,
- Durchführung des in dem Verteilungsplan spezifizierten Fehlerkorrekturverfahrens zur Generierung der Dateifragmente aus der Datei durch das Kommunikationssystem,
- Senden des Authentifizierungssignals des Kommunikationssystems zum Speichern der Dateifragmente in den im Verteilungsplan identifizierten mehreren Speichern des Speichersystems an den Dateimanagementserver über ein Netzwerk,
- in Antwort auf den Empfang des Authentifizierungssignals, Anforderung eines Berechtigungstokens durch den Dateimanagementserver von jedem der in dem Verteilungsplan identifizierten mehreren Speichern des Speichersystems und Weiterleitung der in Antwort auf die Anforderung erhaltenen Berechtigungstoken durch den Dateimanagementserver an das Kommunikationssystem, und
- Speichern der generierten Dateifragmente in den Speichern des Speichersystems über das Netzwerk mittels Berechtigungsnachweis durch die Berechtigungstoken unter Umgehung des Dateimanagementservers durch das Kommunikationssystem.

Dieses Verfahren kann vorteilhaft sein, da die Speicherung von mittels eines Fehlerkorrekturverfahrens erzeugten Dateifragmenten in verschiedenen Speicherdiensten die Verfügbarkeit der zu speichernden Daten erhöhen kann. Außerdem kann dadurch auch die Sicherheit der Daten vor einem unberechtigten Zugriff durch den Speicherdienst erhöht werden: Fehlerkorrekturverfahren generieren Dateifragmente, die Korrekturbits enthalten und somit, je nach Anteil der Korrekturbits in den Fragmenten und je nach der Anzahl der generierten Dateifragmente, eine Rekonstruktion der ursprünglichen Datei erlauben, sollte einer oder mehrere der Speicherdienste temporär oder permanent ausfallen.

Jedoch kann keiner der Speicherdienste die Daten rekonstruieren, selbst wenn der Speicherdienst eine etwaige Verschlüsselung der Dateifragmente "knacken" sollte, da kein Speicherdienst sämtliche Dateifragmente erhält. Die Sicherheit durch unberechtigten Zugriff durch den Betreiber des Speicherdienst kann in synergistischer Weise dadurch erhöht werden, dass eine strikte Trennung des Zugriffsmanagements durch den Dateimanagementserver in Form der Anforderung der Berechtigungstoken und deren Weiterleitung einerseits und dem Datenmanagement durch die einzelnen Speicherdienste andererseits erfolgt: die Dateifragmente werden unter Umgehung des Dateimanagementservers von dem Nutzersystem direkt in den Speicherdiensten gespeichert. Der Dateimanagementserver agiert also nicht als Router, sondern vermittelt lediglich die Berechtigungstoken, welche dem Kommunikationssystem die Speicherung der Dateifragmente über die Speicherdienste erlaubt. Der Dateimanagementserver hat also keinen Zugriff auf den Inhalt der übertragenen Dateifragmente.

Die Speicherdienste wiederum verfügen nicht über die Metadaten, die zur Rekonstruktion der Datei benötigt werden. Diese Metadaten sind lediglich dem Kommunikationssystem und/oder dem Dateimanagementserver zugänglich. Zudem kann das Verfahren deutlich schneller extern speichern als herkömmliche Verfahren: um zumindest eine Sicherheitskopie einer Datei extern verfügbar zu haben, musste bisher eine Kopie dieser Datei an einen externen Speicherdienst übertragen werden. Im Falle eines Ausfalls dieses externen Dienstes war die Sicherheitskopie verloren oder zumindest temporär nicht mehr verfügbar. Gemäß dieser Ausführungsform werden aber Dateifragmente mittels mehrerer Speicherdienste gespeichert. Dies ermöglicht die parallele Übertragung der Dateifragmente über das Netzwerk. Bei paralleler Übertragung der Dateifragmente kann der gesamte Informationsgehalt der Datei einschließlich der Fehlerkorrekturbits innerhalb eines Bruchteils der Zeit erfolgen, die zur Übertragung einer ganzen Dateikopie an einen einzelnen Speicherdienst notwendig wäre.

Nach Ausführungsformen generiert das Kommunikationssystem die Metadaten, die die Rekonstruktion der Datei aus den gespeicherten Dateifragmenten erlauben. Das Kommunikationssystem ist einem Nutzer zugeordnet. Die Metadaten können ein oder mehrere der folgenden Elemente beinhalten:
- Pfade zu allen Speicherorten in den Speichermedien der Speicherdienste, in welchen die Dateifragmente der Datei gemäß des Verteilungsplans gespeichert werden sollen oder bereits gespeichert wurden; und/oder
- einen symmetrischen Schlüssel, der eine Entschlüsselung des mit diesem symmetrischen Schlüssel verschlüsselten Dateifragments erlaubt; der symmetrische Schlüssel kann zum Beispiel ein für die zu speichernde dateispezifischer Schlüssel sein, was die Sicherheit weiter erhöhen kann; der symmetrische Schlüssel kann beispielsweise ein Hashwert der zu speichernden Datei sein; Zumindest der symmetrische Schlüssel kann von einem öffentlichen kryptographischen Schlüssel des Kommunikationssystems, das die Datei zum Zwecke der Speicherung fragmentierte, oder von einem öffentlichen kryptographischen Schlüssel eines anderen Kommunikationssystems, das von dem Dateimanagementserver als berechtigt zum Zugriff auf die bereits verteilt gespeicherte Datei erkannt wurde, verschlüsselt worden sein. Dies kann bewirken, dass der Dateimanagementserver den symmetrischen Schlüssel nicht zur Entschlüsselung der Dateifragmente verwenden kann, sodass der Inhalt der Dateifragmente vor Zugriff durch den Dateimanagementserver geschützt ist; und/oder
- für jedes der Dateifragmente einen von dem Kommunikationssystem berechneten Hash-Wert des Dateifragments; und/oder
- den ursprünglichen Dateinamen der verteilt gespeicherten Datei; und/oder
- Konfigurationsdaten des Fehlerkorrekturverfahren; die Spezifikation kann insbesondere einen Identifikator (ID) und/oder Konfigurationsparameter des zur Erzeugung der Dateifragmente verwendeten Fehlerkorrekturverfahrens (z.B. die später erläuterten Parameter Wortlänge, Anzahl K der generierten Dateipartitionen und/oder Anzahl M der verlustkompensierbaren Dateipartitionen;
- ein Mapping des ursprünglichen Dateinamens zu den Hashwerten und Pfaden der generierten Dateifragmente.

Zudem ist die Datei dank der Fehlerkorrekturbits nicht verloren, sollte einer der Speicherdienste ausfallen, sondern kann sofort und automatisch aus den übrigen Dateifragmenten mit den Fehlerkorrekturbits und den Metadaten rekonstruiert werden. Dies kann insbesondere für Dateien relevant sein, die hochverfügbar sein müssen, da z.B. diese für die Arbeitsfähigkeit eines Unternehmens erforderlich sind. Der Umstand, dass der Verteilungsplan für die Datei generiert wird, kann eine feingranulare und für die jeweilige Datei optimierte Generierung des Verteilungsplans ermöglichen.

Ein "Verteilungsplan" im Sinne der vorliegenden Erfindung ist eine Spezifikation, welche zumindest Angaben über die Identität derjenigen Speicherdienste enthält, über welche Fragmente einer Datei gespeichert werden sollen sowie Angaben enthält, die einen Fehlerkorrekturverfahren festlegen, welches zur Generierung dieser Dateifragmente aus der besagten Datei verwendet werden soll. Ein Verteilungsplan kann z.B. als XML Datei oder binäre Datei ausgebildet sein.

Ein "Dateimanagementserver" ist beispielsweise ein Computersystem, welches eine Schnittstelle zur Kommunikation mit einem oder mehreren Kommunikationssystemen und zur Kommunikation mit mehreren Speicherdiensten besitzt, um dem einen oder mehreren Kommunikationssystemen Zugriffsrechte auf von diesen Speicherdiensten verwaltete Speichermedien zu vermitteln. Der Dateimanagementserver stellt dabei selbst keinen Speicherdienst bereit und ist vorzugsweise auch von den Speicherdiensten durch sicherheitstechnische Maßnahmen getrennt, welche dafür sorgen, dass keiner dieser Speicherdienste Zugriff auf von dem Dateimanagementserver verwaltete Daten, insbesondere z.B. Nutzerprofile und Metadaten, hat. Der Dateimanagementserver kann aus einem Datenverarbeitungsgerät bestehen oder aus mehreren Datenverarbeitungsgeräten, insbesondere Computern, bestehen, die zusammenwirken und gemeinsam verwaltet werden um die Funktionalität des Dateimanagementservers gemäß den oben beschriebenen Ausführungsformen bereitzustellen.

Ein "Berechtigungstoken" ist eine Datenstruktur, beispielsweise eine Datei, welche Informationen beinhaltet, die einer Instanz, die im Besitz dieses Berechtigungstokens ist, eine Berechtigung zum Zugriff auf Speicherbereiche externer Speichermedien einräumt. Die externen Speichermedien können z.B. von einem Speicherdienst über ein Netzwerk wie z.B. das Internet bereitgestellt werden. Nach Ausführungsformen kann das Berechtigungstoken sowohl einen Zeiger als auch einen Berechtigungsausweis enthalten. Der Zeiger kann z.B. aus einer Kombination aus einer IP-Adresse eines Speicherdienstes und einem Dateipfad eines von diesem Speicherdienst verwalteten Speichermediums bestehen. Der Berechtigungsausweis kann z.B. ein oder mehrere Datenwerte beinhalten, die den Besitzer des Berechtigungstokens als zugriffsberechtigt ausweisen, z.B. einen von dem Speicherdienst generierten Zufallswert der mit einem Referenzwert verglichen werden kann. Die besagten Datenwerte können auch eine Signatur umfassen.

Nach Ausführungsformen sind die Berechtigungstoken für das Schreiben von Dateifragmenten als URLs (engl. "Uniform Resource Locator"/einheitlicher Ressourcenzeiger) ausgebildet, die jeweils einen direkten Schreibzugriff auf einen durch die URL identifizierten Speicherplatz auf dem Speichermedium eines der Speicherdienste ermöglicht. Die URL identifiziert und lokalisiert einen Speicherbereich innerhalb des Speichersystems und den Ort des Speicherbereichs in Computernetzwerken, beispielsweise dem Internet. In analoger Weise sind Berechtigungstoken für das Lesen von Dateifragmenten als URLs ausgebildet, die jeweils einen direkten Lesezugriff auf einen durch die URL identifizierten Speicherbereich auf dem Speichermedium eines der Speicherdienste ermöglichen.

Dies kann vorteilhaft sein, da der Dateimanagementserver nicht als Router fungiert, was den Schutz der Daten vor unberechtigtem Zugriff durch den Dateimanagementserver gewährleisten kann. Dass die Berechtigungstoken nur eine temporäre Gültigkeit haben, kann die Sicherheit des Verfahrens ebenfalls erhöhen. Nach Ablauf einer voreingestellten bzw. vordefinierten Zeit, zum Beispiel einigen Sekunden, Minuten oder Tagen, wird das Berechtigungstoken, zum Beispiel eine URL, automatisch ungültig. Die Verwendung von Berechtigung-URLs hat zudem den Vorteil, dass auch Nutzern, die sich nicht bei den einzelnen Speicherdiensten registriert haben, Zugriff auf die Datei gewährt werden kann, da der Dateimanagementserver zentral die Zugriffsrechte verwaltet. Der Eigentümer der Datei kann spezifisch festlegen, ob die Zugriffsrechte rein lesend und/oder auch schreibend sind. Dies kann die Flexibilität und Zahl der Anwendungsszenarien des Verfahrens enorm erhöhen, da weitere Nutzer sich nur bei dem Dateimanagementserver registrieren müssen um beispielsweise eine Datei ansehen zu können.

Ein "Speicherdienst" ist ein über ein Netzwert bereitgestellter Dienst, der es einem oder mehreren Kommunikationssystemen ermöglicht, Daten über das Netzwerk an den Dienst zu senden damit diese von dem Speicherdienst auf ein oder mehreren von dem Speicherdienst verwalteten Speichermedien gespeichert werden, und/oder der es den Kommunikationssystemen ermöglicht, auf bereits von diesem oder einem anderen Kommunikationssystemen gespeicherte Daten über das Netzwerk - z.B. lesend oder schreibend - zuzugreifen. Ein einzelner Speicherdienst ist dabei von jedem anderen Speicherdienst vorzugsweise technisch und organisatorisch getrennt. Nach Ausführungsformen ist jeder der Speicherdienste dazu konfiguriert, über eine Schnittstelle Daten von dem Kommunikationssystem über das Netzwerk zu empfangen und diese in seinem nicht flüchtigen Speichermedium zu speichern.

Ein "Fehlerkorrekturbit" ist ein Bit, welches zusätzlich zu ein oder mehreren Bits der eigentlichen Nutzdaten generiert und ggf. an einen Empfänger übertragen wird, und welches zur Kontrolle der Integrität der besagten ein oder mehreren Bits der Nutzdaten während der Übertragung an den Empfänger dient.

Ein "Fehlerkorrekturverfahren" ist ein Verfahren, welches dazu dient, Fehler bei der Speicherung und Übertragung von Daten zu erkennen und zu korrigieren, wobei ein Fehler auch darin bestehen kann, dass Teile einer logisch zusammenhängenden Datenmenge (z.B. eine Datei) temporär oder dauerhaft nicht verfügbar sind, z.B. wegen Ausfalls eines Speichermediums, das diese Teile gespeichert hatte. Um dies zu erreichen fügen Fehlerkorrekturverfahren vor der Speicherung oder Übertragung von Nutzdaten diesen Nutzdaten zusätzliche Redundanz in Form zusätzlicher Fehlerkorrekturbits hinzu, die zur Bestimmung von Fehlern und Fehlerpositionen und auch zur Rekonstruktion fehlender Teile der Nutzdaten genutzt werden können.

Nach manchen Ausführungsformen umfasst das Verfahren:
- Bereitstellung einer editierbaren Konfiguration, die Anforderungen eines Nutzers hinsichtlich der Geschwindigkeit, der geographischen Lage, der Sicherheit und/oder der Kosten einer für die Speicherung von Daten zu nutzenden IT-Infrastruktur sowie Anforderungen des Nutzers hinsichtlich der Verfügbarkeit der zu speichernden Daten enthält;
- Bereitstellung eines Speicherdienst-Katalogs, der Spezifikationen einer Vielzahl von zur Verfügung stehenden Speicherdiensten umfasst, wobei die Spezifikation jedes der Speicherdienste Angaben hinsichtlich der Geschwindigkeit, der geographischen Lage, der Sicherheit und/oder der Kosten einer für die Speicherung der Daten genutzten IT-Infrastruktur des Speicherdienstes enthalten;
- um den Verteilungsplan zu generieren, automatische Auswertung der Konfiguration und des Speicherdienst-Katalogs, um in Abhängigkeit von den Spezifikationen der verfügbaren Speicherdienste und in Abhängigkeit der Anforderungen des Nutzers ein Fehlerkorrekturverfahren aus einer Vielzahl von Fehlerkorrekturverfahren zu identifizieren, das den Anforderungen hinsichtlich der Verfügbarkeit der zu speichernden Daten genügt und um die im Verteilungsplan identifizierten Speicherdienste aus der Vielzahl der zur Verfügung stehenden Speicherdienste zu identifizieren, die zu einer verteilten Speicherung der Datei gemäß den nutzerspezifischen Anforderungen hinsichtlich der Geschwindigkeit, geographischen Lage, Sicherheit und/oder Kosten der für die Speicherung von Daten zu nutzenden IT-Infrastruktur geeignet sind; und
- Verwenden des identifizierten Fehlerkorrekturverfahrens als das Fehlerkorrekturverfahren des Verteilungsplans.

Beispielsweise umfasst die Konfiguration Konfigurationsregeln, die von dem Nutzer erstellt und angepasst werden können. Bei Ausführungsformen in welchen der Verteilungsplan von dem Kommunikationssystem generiert wird erfolgt auch die automatische Auswertung durch das Kommunikationssystem. Wird der Verteilungsplan von dem Dateimanagementserver generiert, erfolgt auch die automatische Auswertung durch den Dateimanagementserver. Vorzugsweise wird jedoch in beiden Ausführungsformen sowohl der Speicherdienst-Katalog als auch die Nutzer-Konfiguration zur Nutzung durch eine Vielzahl von Kommunikationssystemen zentral gespeichert, zum Beispiel auf dem Dateimanagementserver oder einem mit diesem verbundenen Datenbankserver. Dies kann die Aktualisierung des Speicherdienst-Katalogs erleichtern. Nach manchen Ausführungsformen hat der Dateimanagementserver eine Schnittstelle, die mit Schnittstellen der Speicherdienste interoperabel ist und bewirkt, dass bei einer Änderung bezüglich der Sicherheit, geographischen Lage, Verfügbarkeit oder Kosten der IT-Infrastruktur eines der Speicherdienste eine automatische Aktualisierung der in dem Speicherdienst-Katalog enthaltenen Spezifikation dieses Speicherdienstes bewirkt wird.

In einer Ausführungsform ist zumindest eine Datei gemäß dem Verteilungsplan mittels des Fehlerkorrekturverfahrens in Dateifragmente aufgeteilt und die resultierenden Dateifragmente auf die Speicher des Speichersystems verteilt gespeichert sind, wobei ein Lesen einer Datei umfasst:
- nach erfolgreicher Authentifizierung über den Dateimanagementserver mittels des Authentifizierungssignals und falls der Nutzer, dem das Kommunikationssystem zugeordnet ist, Zugriffsrechte für die Datei besitzt, Empfangen eines Berechtigungstoken für jeden Speicher zumindest einer Auswahl der Speicher des Speichersystems, in deren nichtflüchtigen Speichermedien die Dateifragmente gemäß dem Verteilungsplan gespeichert sind, über den Dateimanagementserver, wobei die von der Auswahl der Speicher umfassten Dateifragmente ausreichend für eine Rekonstruktion der Datei sind, wobei die Berechtigungstoken dem Kommunikationssystem den angeforderten Zugriff auf die durch die Speicher des Speichersystems jeweils gespeicherten Dateifragmente unter Umgehung des Dateimanagementservers ermöglichen,
- Herunterladen der Dateifragmente von den einzelnen Speichern des Speichersystems unter Verwendung der Berechtigungstoken,
- Rekonstruieren der Datei aus den Dateifragmenten.

In einer Ausführungsform werden die Zugriffsrechte für die gespeicherte Datei individuell oder anhand eines Dateityps und/oder einer Dateigruppe festgelegt.

Das Festlegen von individuellen und/oder dateitypabhängigen Zugriffsrechten bewirkt in vorteilhafter Weise, dass für Dateien mit unterschiedlicher Sensibilität unterschiedliche Prüfungskriterien mit unterschiedlichen Schwellenwerten für das Klassifikationsergebnis vergeben werden können. Beispielsweise kann auf sehr persönliche Dateien dann zugegriffen werden, wenn das Klassifikationsergebnis einen höheren Schwellenwert überschreiten muss, als das Klassifikationsergebnis bei weniger persönlichen Dateien überschreiten muss. Der Nutzer kann beispielsweise selbst festlegen, welchen Dateien er welche Zugriffsrechte zuweist. Der Nutzer ist somit frei bei der Vergabe von Zugriffsrechten auf die in dem Speicher des Speichersystems gespeicherten Dateien. Ferner können Dateien eines Dateityps generell mit unterschiedlichen Rechten versehen werden. Beispielsweise kann für .exe Dateien ausschließlich ein Lesezugriff bestehen, um die Gefahr von Viren und/oder Trojanern in dem Speicher des Speichersystems zu vermindern. Sind die Zugriffsrechte für Dateitypen vergeben, so muss der Nutzer nicht für jede Datei einzeln festlegen. Insbesondere wenn viele Dateien des gleichen Dateityps in dem Speicher des Speichersystems gespeichert sind ist diese Ausführungsform vorteilhaft.

Der Nutzer kann beispielsweise die Zugriffsrechte für unterschiedliche Dateitypen vergeben. Ferner können die Zugriffsrechte beispielsweise durch das Kommunikationssystem, das Speichersystem oder auf eine andere Art bestimmt sein.

In einer Ausführungsform umfasst das Authentifizierungssignal Informationen bezüglich der Zugriffsrechte, wobei die Zugriffsrechte dateiindividuelle oder gruppenspezifische Zugriffsrechte umfassen.

Umfasst das Authentifizierungssignal die Zugriffsrechte, so kann das Ergebnis der Prüfung des Klassifikationsergebnisses gegen das Prüfungskriterium Einfluss auf die Zugriffsrechte nehmen. Beispielsweise kann ein Nutzer aufgrund eines ersten Klassifikationsergebnisses nur eingeschränkten Zugriff auf die Dateien haben, da Prüfungskriterium mehrere Teilkriterien umfasst. Beispielsweise umfasst ein Teilkriterium einen ersten Schwellenwert und ein weiteres Teilkriterium einen zweiten Schwellenwert, wobei der zweite Schwellenwert einen höheren Wert als der erste Schwellenwert darstellt. Ist das Teilkriterium mit dem ersten Schwellenwert erfüllt, das Teilkriterium mit dem zweiten Schwellenwert jedoch nicht, so kann der Zugriff des Nutzers auf das Speichersystem beispielsweise beschränkt sein. Zu einem zweiten Zeitpunkt kann derselbe Nutzer vollen Zugriff auf die Dateien erlangen, da ein zweites Klassifikationsergebnis den Nutzer mit einer höheren Wahrscheinlichkeit als den registrierten Nutzer identifiziert hat, und das zweite Klassifikationsergebnis beide Teilkriterien erfüllt.

Ferner können unterschiedlichen Nutzern unterschiedliche Prüfungskriterien vorgegeben sein, um auf denselben Speicher eines Speichersystems zuzugreifen. Beispielsweise ist ein erster Nutzer als Administrator und/oder Eigentümer registriert. Ein zweiter Nutzer ist beispielsweise als Gast registriert. Das Authentifizierungssignal des Administrators/Eigentümers liegt beispielsweise dem gleichen oder einem ähnlichen Klassifikationsergebnis zu Grunde, wie das Authentifizierungssignal des Gastes. Trotzdem kann der Administrator/Eigentümer mehr Zugriffsrechte besitzen, als der Gast, da das Authentifizierungssignal des Administrators von vornherein mehr Zugriffsrechte umfasst, als das Authentifizierungssignal des Gastes.

In einer weiteren Ausführungsform ist das Klassifikationsmodul auf ein Erkennen eines kritischen Zustands anhand der nutzerbezogenen Daten des Nutzers trainiert, wobei das Kommunikationssystem eine Schnittstelle aufweist, wobei das Kommunikationssystem dazu konfiguriert ist über die Schnittstelle mit einem Sonderauthentifizierungsmittel zu kommunizieren, wobei ein Besitzer des Sonderauthentifizierungsmittels Sonderzugriff auf das Speichersystem erlangt, wobei das Erlangen des Sonderzugriffs die folgenden Schritte umfasst:
- Erkennen eines kritischen Zustands des Nutzers anhand der nutzerbezogenen Daten,
- auf das Erkennen des kritischen Zustandes des Nutzers hin, senden eines Sonderauthentifizierungssignals an das Speichersystem,
- Aufbauen einer kryptographisch gesicherten Verbindung zwischen dem Sonderauthentifizierungsmittel und dem Kommunikationssystem,
- Authentifizieren des Besitzers des Sonderauthentifizierungsmittels,
- Erlangen des Sonderzugriffs auf den Speicher des Speichersystems, falls das Kommunikationssystem ein Sonderauthentifizierungssignal gesendet hat und sich der Besitzer des Sonderauthentifizierungsmittels authentifizieren konnte.

Ein kritischer Zustand umfasst dabei einen Zustand, insbesondere einen physiologischen Zustand, in dem der Nutzer Hilfe benötigt. Ein solcher Zustand kann beispielsweise einen Zusammenbruch des Herz-Kreislauf-Systems, einen Herzinfarkt, einen Schlaganfall, einen epileptischen Anfall oder eine Situation umfassen, in welcher der Nutzer die Hilfe eines Arztes oder eines vergleichbaren Heilberufes benötigt.

Ein physiologischer Zustand bezeichnet den Zustand des Körpers eines Nutzers. Der Nutzer kann ein Mensch oder ein anderes Lebewesen sein. Ein Zustand wird dabei durch N physiologische Parametern charakterisiert, wobei N größer 1 ist. Die verschiedenen Zustände bilden Parameterwolken in einem N-dimensionalen Parameterraum. Diese Wolken können klar unterscheidbar voneinander sein oder einander partiell oder ganz überlappen. Versucht man den physiologischen Zustand eines Nutzers zu charakterisieren, so umfasst die Klassifikation eine Zuordnung der zur Verfügung stehenden physiologischen Parameter zu einem Zustand bzw. zu einer Zustandswolke. Eine oder mehrere solcher Zustände können dabei als kritische Zustände bezeichnet werden. Das bedeutet, dass beispielsweise ein oder mehrere Parameter, die einen solchen Zustand charakterisieren, einen ungewöhnlich hohen oder ungewöhnlich niedrigen Wert aufweisen, wobei die Abweichung anhand einer durchschnittlichen Verteilung um einen für den Nutzer festgelegten Normalwert gemessen wird.

Das Klassifikationsmodul ist in dieser Ausführungsform unter Verwendung von Trainingsdaten einer Nutzerkohorte darauf trainiert, zumindest einen physiologischen Zustand anhand der nutzerbezogenen Daten zu erkennen. Bei dem zumindest einen Zustand kann es sich beispielsweise um einen allgemeinen kritischen Zustand handeln, der kennzeichnet, dass der Nutzer Hilfe benötigt, oder einen konkreten bestimmten Zustand, wie beispielsweise den Zustand "Herzinfarkt", "Schlaganfall", "epileptischer Anfall" oder "Bewusstlosigkeit".

In einer Ausführungsform weist das Kommunikationssystem eine Schnittstelle auf, wobei das Kommunikationssystem dazu konfiguriert ist, über die Schnittstelle mit einem Sonderauthentifizierungsmittel, beispielsweise einem elektronischen Heilberufsausweis (eHBA), zu kommunizieren.

Das Sonderauthentifizierungsmittel umfasst beispielsweise einen ID-Token, welcher mittels Drahtloskommunikation mit dem Kommunikationssystem kommunizieren kann und/oder ein Zertifikat einer Berechtigungs-PKI (Public Key Infrastruktur), welches dem Besitzer des Sonderauthentifizierungsmittels den Zugriff auf die in dem Speicher des Speichersystems gespeicherten Daten des Nutzers ermöglicht. Dabei kann der Zugriff je nach Konfiguration des Sonderauthentifizierungsmittels auf bestimmte Dateien beschränkt sein.

Unter einem "ID-Token" wird im Folgenden ein papier- und/oder kunststoffbasiertes Dokument verstanden, auf dem personenspezifische und/oder dokumentenspezifische Informationen optisch lesbar aufgebracht sind, die eine Identifizierung des Nutzers oder des Dokumentes, beispielsweise für die Freigabe und Nutzung bestimmter Dienste oder Funktionen ermöglicht. Darunter fallen zum Beispiel Ausweisdokumente, insbesondere elektronische Heilberufsausweise, Reisepässe, Personalausweise, Visa sowie Führerscheine, Fahrzeugscheine, Fahrzeugbriefe, Firmenausweise, Gesundheitskarten oder andere ID-Dokumente sowie auch Frachtbriefe oder sonstige Berechtigungsnachweise. Beispielsweise kann das Dokument auch ein Wertgutschein oder eine Zugangskarte sein. Das Dokument umfasst ferner einen Chip oder andere elektronische Bauteile sowie Daten in gespeicherter Form, welche den Besitzer des Sonderauthentifizierungsmittels als berechtigte Person, beispielsweise einen Sanitäter, einen Arzt, einen Polizisten, einen Feuerwehrmann und/oder ausgebildete Ersthelfer, identifizieren.

Das Zugreifen eines Besitzers eines Sonderauthentifizierungsmittels auf die in dem Speicher des Speichersystems gespeicherten Daten des Nutzers, falls die Klassifikation des Zustandes einen kritischen Zustand umfasst, bewirkt in vorteilhafter Weise, dass ein qualifizierter Helfer schnell Zugriff auf hilfreiche Informationen bezüglich des aktuellen Zustandes des Nutzers erlangt. Insbesondere in kritischen Situationen kann das Zugreifen auf Dateien, welche wichtige Informationen enthalten, darüber entscheiden, welche Behandlung des Nutzers anzuwenden ist. Die wichtigen Informationen können beispielsweise Informationen bezüglich Allergien, Unverträglichkeiten, bereits bekannten Vorerkrankungen und/oder Risiken für bestehende Krankheiten, der Blutgruppe, kürzlich eingenommener Medikamente oder Hinweise auf die Identität des Nutzers, beispielsweise seine Adresse und im Notfall zu benachrichtigende Personen umfassen.

In einer Ausführungsform umfasst der Sonderzugriff ausschließlich einen Lesezugriff auf den Speicher des Speichersystems.

In einer Ausführungsform ist der Sonderzugriff auf vordefinierte Kategorien und/oder Gruppen von Dateien beschränkt.

Das Verwenden eines Sonderauthentifizierungsmittels bzw. das Authentifizieren des Nutzers eines Sonderauthentifizierungsmittels bewirken in vorteilhafter Weise, dass der Zugriff auf die in dem Speicher des Speichersystems gespeicherten Daten auf berechtigte Personen beschränkt ist. Dadurch werden geltende Bestimmungen des Datenschutzes berücksichtigt und die Daten vor unerlaubten Zugriff geschützt.

In einer weiteren Ausführungsform umfassen die nutzerbezogenen Daten physiologische und/oder biometrische Daten des Nutzers, wobei die physiologischen und/oder biometrischen Daten des Nutzers zur Authentifizierung verwendet werden, wobei der kritische Zustand anhand der physiologischen und/oder biometrischen Daten des Nutzers erkannt wird.

Als biometrische Parameter werden Parameter bezeichnet, welche Merkmale des Körpers eines Nutzers und seine Funktionen quantifizieren. Quantifizieren bedeutet hier, eine Umformulierung der Merkmale und Funktionen in messbare Größen und Zahlenwerte. Dabei kann es sich beispielsweise um Eigenschaften des Körpers handeln, wie beispielsweise den Augenabstand, die Ohrmuschelform, die Schuhgröße oder dem Fingerabdruckmuster. Ferner können biometrische Parameter auch Parameter umfassen, die sich mit der Zeit ändern können.

Ferner können die biometrischen Parameter Parameter einer Bewegung, etwa einer grobmotorischen Bewegung, wie zuvor beschrieben, umfassen. Ein solcher Parameter kann einen konkreten Parameter, wie beispielsweise die Amplitude der Auf- und Abbewegung des Körpers beim Gehen, oder einen abstrakten Parameter, wie beispielsweise den durchschnittlichen Fehler der Hüftdrehung um die Körperlängsachse beim Laufen, umfassen.

Die biometrischen Daten können beispielsweise eine Pulsfrequenz, einen Blutdruck, eine Körpertemperatur, eine Schrittfrequenz oder andere biometrische Parameter umfassen. Das Klassifikationsmodul ist zur Erkennung einer Mehrzahl von generischen Zuständen einer Mehrzahl von physiologischen Parametern mithilfe von Trainingsdatensätzen einer Nutzerkohorte trainiert und wird durch den Prozessor des Kommunikationssystems ausgeführt.

Die physiologischen Parameter umfassen Parameter, die für eine Klassifikation des physiologischen Zustandes verwendet werden. Die physiologischen Parameter können die biometrischen Parameter eines Nutzers direkt oder eine Kombination aus mehreren biometrischen Parametern oder aus mindestens einem biometrischen und einem nichtbiometrischen Parametern umfassen. Ein nichtbiometrischer Parameter umfasst beispielsweise die Zeit bzw. eine Zeiteinheit. So können beispielsweise die Änderung des Pulses, die Laufgeschwindigkeit und/oder die Änderung der Laufgeschwindigkeit einen physiologischen Parameter bilden.

In einer Ausführungsform umfassen die vordefinierten Kategorien und/oder Gruppen von Dateien die physiologischen und/oder biometrischen Daten des Nutzers.

Durch das Beschränken des Sonderzugriffs auf die physiologischen und/oder biometrischen Daten des Nutzers wird sichergestellt, dass eine zum Sonderzugriff berechtigte Person auch nur auf die Daten zugreifen kann, die für die Ausübung ihrer Tätigkeit, beispielsweise Erste Hilfe leisten, Patientendaten einsehen oder ähnliche Tätigkeiten im Heilbereich, benötigt werden. Auf andere, möglicherweise private Daten hat die für den Sonderzugriff berechtigte Personen keine Rechte. Um eine solche Unterscheidung machen zu können, sind die in dem Speichersystem gespeicherten Daten in beispielsweise zwei Kategorien unterteilt: Für Erste Hilfe relevante Daten und für Erste Hilfe irrrelevante Daten.

Im Weiteren werden Ausführungsformen mit Bezugnahme auf die Zeichnungen näher erläutert. Es zeigen:
- Figur 1: einen schematischen Aufbau eines beispielhaften mobilen, tragbaren Kommunikationssystems zur verhaltensbasierten Authentifizierung eines Nutzers.
- Figur 2: einen schematischen Ablauf einer verhaltensbasierten Authentifizierung in einem Ablaufdiagramm.
- Figur 3a: Schritte der verhaltensbasierten Authentifizierung in einem Ablaufdiagramm.
- Figur 3b: Schritte eines Trainings eines Klassifikationsmoduls in einem Ablaufdiagramm.
- Figur 4: ein schematisches Verfahren zur Abarbeitung von Daten, die das mobile, tragbare Kommunikationssystem verarbeitet.
- Figuren 5: jeweils einen schematischen Aufbau einer beispielhaften Ausführungsform des Kommunikationssystems und des Speichersystems.
- Figur 6: Schritte des schematischen Ablaufs des Erlangen des Zugriffs auf das Speichersystem.
- Figur 7: Schritte des schematischen Ablaufs des Speicherns einer Datei in dem Speichersystem.
- Figur 8: Schritte des schematischen Ablaufs des Auslesens einer Datei aus dem Speichersystem.
- Figur 9: Schritte des schematischen Ablaufs des Erlangens eines Sonderzugriffs.

Elemente der nachfolgenden Ausführungsformen, die einander entsprechen, werden mit denselben Bezugszeichen gekennzeichnet.

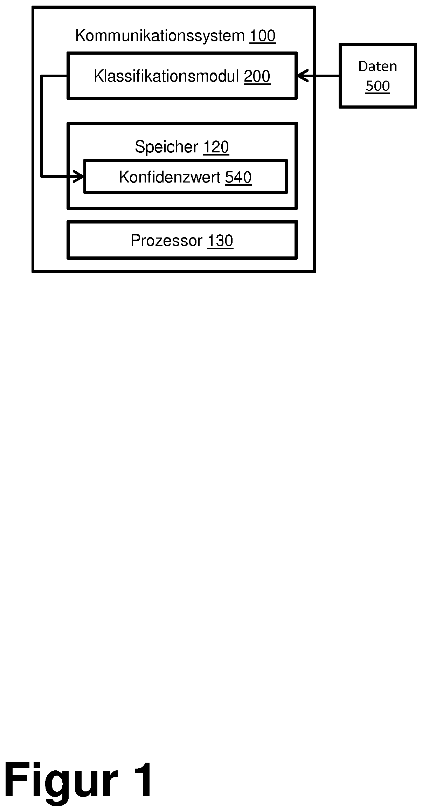

Figur 1 zeigt den schematischen Aufbau einer Ausführungsform eines mobilen, tragbaren Kommunikationssystems 100, welches von einem Nutzer mitgeführt wird. Das Kommunikationssystem 100 kann in verschiedenen Ausführungsformen ein einzelnes mobiles, tragbares Kommunikationsgerät oder mehrere mobile, tragbare Kommunikationsgeräte umfassen. Das Kommunikationssystem ist geeignet, um eine verhaltensbasierte Authentifizierung des Nutzers 1 auszuführen. Das tragbare Kommunikationssystem 100 weist einen Sensor auf, welcher dazu geeignet ist, nutzerbezogene Daten 500 zu erfassen. Ferner weist das Kommunikationssystem 100 ein Klassifikationsmodul 200 auf, welches geeignet ist, die nutzerbezogenen Daten 500 des Sensors zu verarbeiten. Das Kommunikationssystem 100 weist ferner einen internen Speicher 120 auf, in dem die Daten 500 in verarbeiteter Form als Konfidenzwert 540 gespeichert werden können. Das Kommunikationssystem 100 weist ferner einen Prozessor 130 auf, welcher das Klassifikationsmodul 200 ausführt.

In einer weiteren Ausführungsform implementiert das Kommunikationssystem 100 eine Anwendung, welche ausgebildet ist, Anwendungsdaten als nutzerbezogene Daten 500 zu erfassen. Das Klassifikationsmodul ist ferner dazu ausgebildet die Anwendungsdaten einer Anwendung zu verarbeiten.

Führt der Nutzer beispielsweise eine grobmotorische Bewegung aus und trägt dabei das mobile Kommunikationssystem 100 bei sich (z.B. in einer Tasche eines Bekleidungsstücks des Nutzers, wie z.B. in seiner Jacken- oder Hosentasche, oder direkt am Körper), so kann der Sensor diese grobmotorische Bewegung in Form von grobmotorischen Bewegungsdaten erfassen, und zwar aufgrund der Bewegung des Kommunikationssystems, die mittelbar (über das Bekleidungsstück) oder unmittelbar (wenn der Nutzer das Kommunikationssystem am Körper trägt) durch die grobmotorische Bewegung des Nutzers verursacht wurde. Der Sensor kann beispielsweise als ein Beschleunigungssensor oder ein Gyroskop oder eine Kombination aus beidem ausgebildet sein. Die Bewegung des Nutzers kann beispielsweise ein Gehen, ein Joggen, ein Rennen oder eine Bewegung des Armes sein, falls das Kommunikationsgeräts, welches den Sensor aufweist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems 100 aus einer Tasche verstanden werden.

Nutzt der Nutzer eine Anwendung, welche auf seinem Kommunikationssystem 100 implementiert ist, so erfasst das Kommunikationssystem 100 die Anwendungsdaten als nutzerbezogene Daten 500.

Führt der Nutzer eine feinmotorische Bewegung aus, so kann der Sensor diese Bewegung in Form von feinmotorischen Bewegungsdaten erfassen. Der Sensor kann beispielsweise als ein Touchdisplay, eine Tastatur oder eine Kombination aus beidem ausgebildet sein. Die feinmotorische Bewegung des Nutzers kann beispielsweise als Tippgeschwindigkeit, Eingabefrequenz oder Eingabegenauigkeit erfasst werden.

Das Klassifikationsmodul 200 empfängt die nutzerbezogenen Daten 500 und klassifiziert die Daten 500 als ein Muster. Das Klassifikationsmodul 200 wird dabei von einem Prozessor 130 des Kommunikationssystems 100 ausgeführt. Aus der Klassifikation generiert das Klassifikationsmodul 200 den mindestens einen Konfidenzwert 540. Dieser mindestens eine Konfidenzwert 540 wird in dem internen Speicher 120 des Kommunikationssystems 100 gespeichert.

Muss sich der Nutzer authentifizieren, wird der mindestens eine Konfidenzwert 540 aus dem Speicher 120 des Kommunikationssystems ausgelesen und verarbeitet. Dabei wird das Klassifikationsergebnis 600 generiert.

Ist der Nutzer gemäß dem Klassifikationsergebnis 600 authentifiziert, so werden die Daten 500, die zu der erfolgreichen Authentifizierung beigetragen haben, in dem Speicher 120 des Kommunikationssystems 100 gespeichert bzw. zu einem in dem Speicher 120 gespeicherten Vergleichsdatensatz hinzugefügt, um für zukünftige Authentifizierungsversuche bei der Generierung der zukünftigen Konfidenzwerte 540 verwendet zu werden.

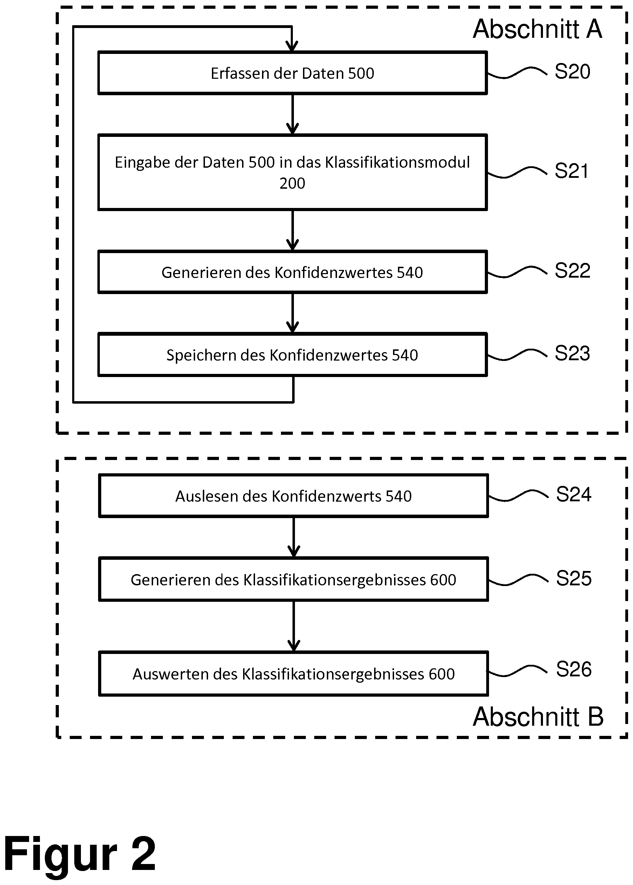

Figur 2 zeigt die verhaltensbasierte Authentifizierung eines Nutzers in einem Ablaufdiagramm. Die verhaltensbasierte Authentifizierung kann dabei in zwei Abschnitte A und B unterteilt werden. Abschnitt A wird wiederholt ausgeführt, und bildet so eine schleifenartige Ausführungsstruktur. Das Kommunikationssystem 100 erfasst in Schritt S20 die nutzerbezogenen Daten 500. Die Daten 500 werden in Schritt S21 in das Klassifikationsmodul 200 eingegeben. Aus den Daten 500 generiert das Klassifikationsmodul 200 in Schritt S22 den mindestens einen Konfidenzwert 540. Der mindestens eine generierte Konfidenzwert 540 wird in Schritt S23 in dem Speicher 120 des Kommunikationssystems 100 gespeichert. Das Kommunikationssystem 100 erfasst dann neue Daten 500. Das ganze Verfahren gemäß Abschnitt A wird wiederholt ausgeführt.

In einer Ausführungsform erfasst das Kommunikationssystem 100 die Daten 500 als Datenstrom (Stream), wobei das Klassifikationsmodul 200 die Daten 500 als Stream empfängt und verarbeitet. Die Konfidenzwerte 540 werden dabei in sehr kurzen zeitlichen Abständen, die durch die Taktrate des Prozessors und/oder des Sensors vorgegeben werden, im Speicher 120 des Kommunikationssystems 100 abgespeichert.

Abschnitt B wird dann ausgeführt, wenn sich der Nutzer authentifizieren muss und eine Authentifizierungsanfrage an das Betriebssystem gesendet wurde. Die Authentifizierungsanfrage umfasst eine Anforderung zum Auslesen von mindestens einem Konfidenzwert 540 aus dem Speicher 120 des Kommunikationssystems. Der mindestens eine Konfidenzwert 540 wird dann aus dem Speicher 120 des Kommunikationssystems in Schritt S24 ausgelesen.
Aus dem mindestens einen Konfidenzwert 540 wird in Schritt S25 das Klassifikationsergebnis 600 generiert. Anschließend wird das Klassifikationsergebnis 600 in Schritt S26 ausgewertet. Eine Auswertung des Klassifikationsergebnisses 600 umfasst beispielsweise das Prüfen des Klassifikationsergebnisses 600 gegen ein Prüfungskriterium. Erfüllt das Klassifikationsergebnis 600 das Prüfungskriterium 800, so wird gemäß einer Ausführungsform ein Authentifizierungssignal erzeugt. Erfüllt das Klassifikationsergebnis 600 das Prüfungskriterium 800 nicht, so wird kein Authentifizierungssignal erzeugt.

Ist der Nutzer gemäß dem Klassifikationsergebnis 600 authentifiziert, wodurch ein Senden eines Authentifizierungssignals veranlasst wurde, so werden die Daten 500, die zu der erfolgreichen Authentifizierung beigetragen haben, in dem Speicher 120 des Kommunikationssystems 100 gespeichert bzw. zu einem Vergleichsdatensatz hinzugefügt, um für zukünftige Authentifizierungsversuche bei der Generierung zukünftiger Klassifikationsergebnisse 600 verwendet zu werden.

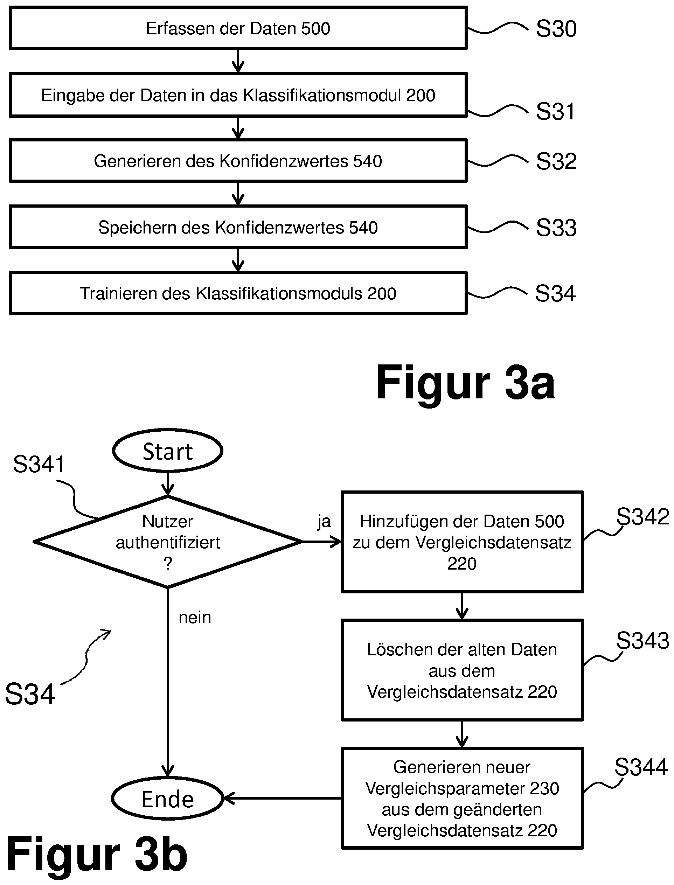

Figur 3a zeigt ein Ablaufdiagramm, welches die Verfahrensschleife A gemäß Figur 2 darstellt. In Schritt S30 werden die Daten 500 erfasst. Die erfassten Daten 500 werden in Schritt S31 in das Klassifikationsmodul 200 eingegeben. In Schritt S32 generiert die Klassifikationsmodul 200 mindestens einen Konfidenzwert 540. Der mindestens eine generierte Konfidenzwert 540 wird in Schritt S33 in dem Speicher 120 des Kommunikationssystems 100 gespeichert. Schließlich wird das Klassifikationsmodul 200 in Schritt S34 trainiert, wobei das Training von dem Klassifikationsergebnis 600 abhängt.

Figur 3b zeigt das Training gemäß Schritt S34 der Figur 3a im Detail. Zunächst wird in Schritt S341 geprüft, ob sich der Nutzer durch das Klassifikationsergebnis 600 authentifizieren konnte. Ist dies nicht der Fall, so werden die erfassten Daten 500 verworfen und es findet kein Training statt.

War die Authentifizierung des Nutzers erfolgreich, werden die Daten 500 in Schritt S342 einem entsprechenden Vergleichsdatensatz 220 hinzugefügt und somit in dem Speicher 120 des Kommunikationssystems gespeichert.

In einer Ausführungsform wird nun geprüft, ob der Vergleichsdatensatz 220 Daten 500 enthält, welche älter als ein bestimmtes Schwellenalter sind. Das Schwellenalter ist beispielsweise durch den Nutzer, das System 150 oder das Kommunikationssystem 100 festgelegt. Beispielsweise kann dieses Schwellenalter einige Tage, eine Woche, mehrere Monate oder Jahre betragen. Beispielsweise beträgt es vier Wochen, drei Monate oder ein Jahr. Sind die Daten älter als das Schwellenalter, werden sie in Schritt S343 aus dem Vergleichsdatensatz gelöscht. Dieser Schritt kann nach Ausführungsformen vor dem Löschen aus dem Vergleichsdatensatz ein Speichern der Daten in dem Speicher des Speichersystems umfassen.

Haben sich die Vergleichsdatensätze 220 durch das Hinzufügen neuer Daten 500 und/oder durch das Löschen alter Daten 500 verändert, werden die jeweiligen Vergleichsparameter 230 in Schritt S344 erneut bestimmt. Diese neuen Vergleichsparameter 230 werden beispielsweise in dem Speicher 120 des Kommunikationssystems 100 gespeichert und stehen bei einem nächsten Authentifizierungsversuch dem Klassifikationsmodul 200 zur Verfügung. Alternativ werden die Vergleichsparameter 230 bei jedem Authentifizierungsversuch neu berechnet, so dass sichergestellt werden kann, dass stets aktuelle auf den registrierten Nutzer trainierte Vergleichsparameter 230 für die Authentifizierung verwendet werden.

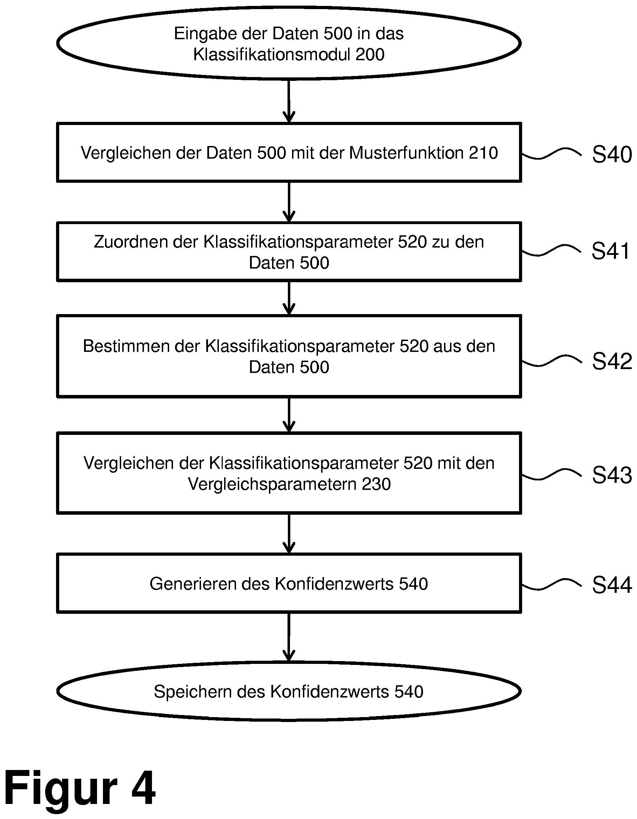

Figur 4 zeigt den schematischen Ablauf zur Generierung des Konfidenzwertes 540 aus den Daten 500. Zunächst erfasst ein Sensor oder eine Anwendung die nutzerbezogenen Daten 500. Die Daten 500 werden dann an das Klassifikationsmodul 200 gesendet. Das Klassifikationsmodul 200 ruft aus dem Speicher 120 des Kommunikationssystems 100 eine Musterfunktion 210 ab und vergleicht in Schritt S40 die Musterfunktion 210 mit den Daten 500. Die Daten 500 werden in Schritt S41 einer Musterfunktion 210 zugeordnet. Auf das Zuordnen der Musterfunktion 210 hin, werden in Schritt S42 die der Musterfunktion 210 zugeordneten Klassifikationsparameter 520 aus den Daten 500 bestimmt.

In dem Speicher 120 des Kommunikationssystems 100 ist ein Vergleichsdatensatz 220 gespeichert, welcher Daten umfasst, wobei die Daten des Vergleichsdatensatzes 220 die Struktur der Daten 500 aufweisen. Dem Vergleichsdatensatz 220 sind Vergleichsparameter 230 zugeordnet, welche aus den Daten des Vergleichsdatensatzes 220 errechnet wurden. Das Klassifikationsmodul 200 liest die Vergleichsparameter 230 aus dem Speicher 120 des Kommunikationssystems aus und vergleicht die Vergleichsparameter 230 mit den Klassifikationsparametern 520 in Schritt S43. Aus dem Unterschied generiert das Klassifikationsmodul 200 in Schritt S44 mindestens einen Konfidenzwert 540, wobei jeder Konfidenzwert 540 einem Klassifikationsparameter 520 zugeordnet ist und somit die Anzahl der Klassifikationsparameter 520 gleich der Anzahl der Konfidenzwerte 540 ist.

Die Konfidenzwerte 540 werden dann gemäß einer Ausführungsform, zum Beispiel durch Bildung des Mittelwerts, des Medians, des Modus oder durch eine komplexere Berechnung, zu einem resultierenden Konfidenzwert zusammengefasst. Der resultierende Konfidenzwert wird in dem Speicher 120 des mobilen, tragbaren Kommunikationssystems 100 gespeichert. Bei einer Authentifizierungsanfrage wird der resultierende Konfidenzwert aus dem Speicher 120 des Kommunikationssystems 100 ausgelesen.

In einer weiteren Ausführungsform wird der mindestens eine Konfidenzwert 540 im Speicher 120 des Kommunikationssystems 100 gespeichert und kann bei einer Authentifizierungsanfrage ausgelesen werden.

Ist der Nutzer gemäß dem Klassifikationsergebnis 600 authentifiziert, so werden die Daten 500, die zu der erfolgreichen Authentifizierung beitrugen, dem Speicher 120 des Kommunikationssystems hinzugefügt, um für zukünftige Authentifizierungsversuche bei der Generierung der zukünftigen Konfidenzwerte 540 verwendet zu werden.

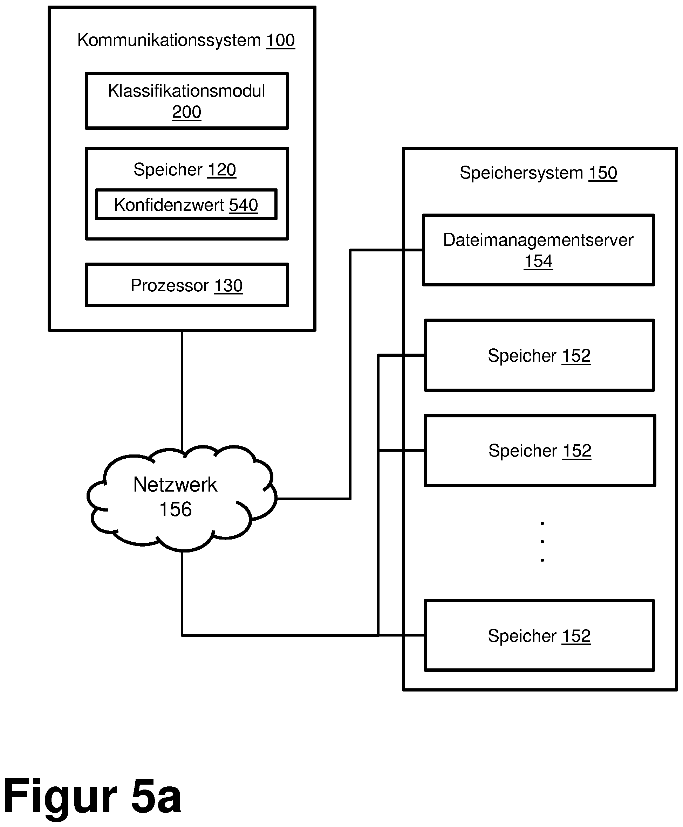

Figur 5a zeigt den schematischen Aufbau einer beispielhaften Ausführungsform des Kommunikationssystems 100 und des Speichersystems 150. Das Kommunikationssystem 100 ist mit dem Speichersystem 150 kommunikativ über ein Netzwerk 156 verbunden. Das Netzwerk kann beispielsweise das Internet, ein Intranet und oder ein lokales Netzwerk umfassen. Die Verbindung kann beispielsweise als eine kabelgebundene Verbindung, eine drahtlose Verbindung, insbesondere ein WLAN, eine RFID- oder eine Funkverbindung, oder eine Kombination der vorhergenannten umfassen.

Das Speichersystem 150 umfasst einen Dateimanagementserver 154 und eine Mehrzahl von Speichern 152. Die Anzahl der Speicher 152 ist beliebig, da das Verfahren von der Anzahl der Speicher unabhängig ist. Jeder Speicher 152 ist in einer Ausführungsform einem Speicherdienstanbieter zugeordnet, wobei einem Speicherdienstanbieter mehrere Speicher 152 zugeordnet sein können.

Die Speicher 152 und der Dateimanagementserver 154 können nach Ausführungsformen jeweils physikalisch eigenständige Geräte umfassen. In weiteren Ausführungsformen werden mehrere Speicher und/oder der Dateimanagementserver von einem Gerät umfasst. Die Speicher sind jeweils mit dem Dateimanagementserver 154 und dem Netzwerk 156 kommunikativ verbunden. Der Dateimanagementserver 154 ist ebenfalls mit dem Netzwerk verbunden.

Das Kommunikationssystem kann je nach Zugriffsart über das Netzwerk 156 und den Dateimanagementserver 154 auf die Speicher 152 zugreifen oder über das Netzwerk 156 direkt auf die Speicher 154 zugreifen.

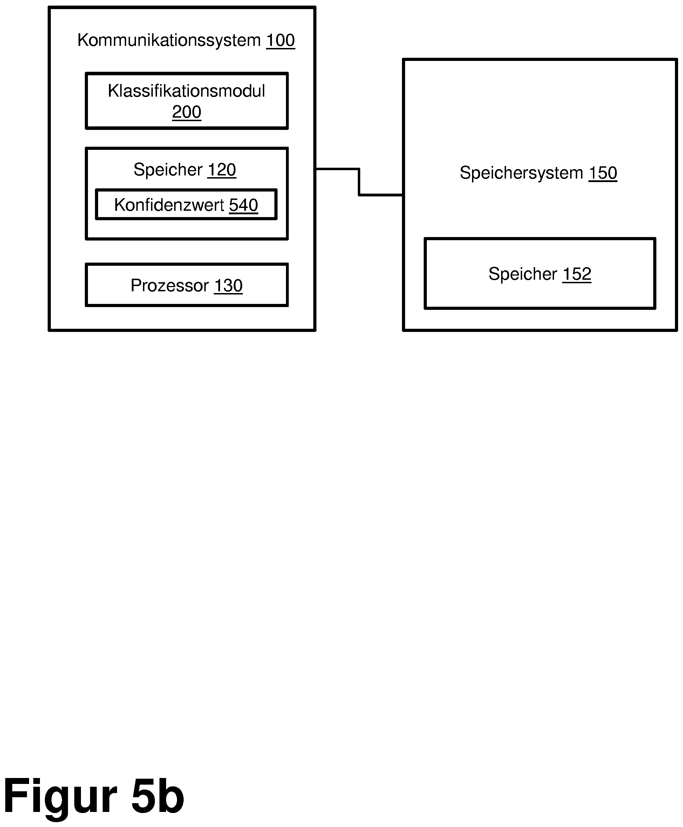

Figur 5b zeigt den schematischen Aufbau einer Ausführungsform des Kommunikationssystems 100 und des Speichersystems 150. Nach dieser Ausführungsform sind das Kommunikationssystem und das Speichersystem direkt miteinander kommunikativ verbunden. Beispielsweise ist das Speichersystem 150 als Heimserversystem ausgebildet und der Nutzer verbindet sein Kommunikationssystem 100 direkt mit den einzelnen Komponenten des Speichersystems 150. In einer weiteren Ausführungsform ist das Speichersystem als Datenbank ausgebildet und umfasst ein Datenbank-Managementsystem sowie einen oder mehrere Speicher 152. Ein Datenbank-Managementsystem umfasst dabei beispielsweise ein Programm, das den Zugriff auf den einen oder die mehreren Speicher 152 regelt.

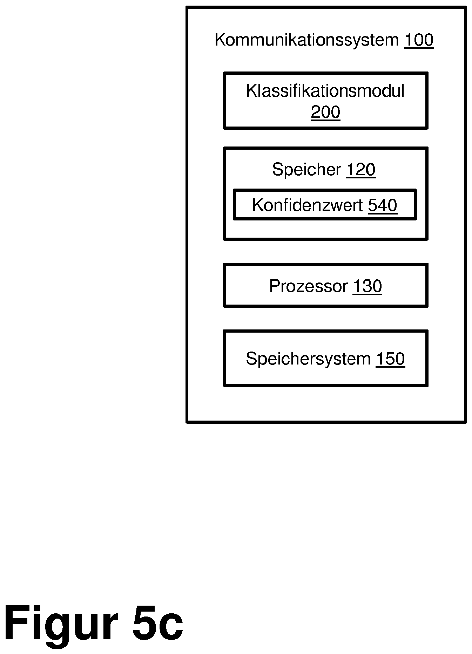

Figur 5c zeigt den schematischen Aufbau einer Ausführungsform des Kommunikationssystems 100 und des Speichersystems 150. Das Speichersystem 150 ist in dieser Ausführungsform ein integraler Bestandteil des Kommunikationssystems 100 und in diesem verbaut. In dieser Ausführungsform werden die Daten beispielsweise von einem Speichermanagementmodul, insbesondere einem Software-Modul und/oder einem Hardware-Modul verwaltet. Das Speichermanagementmodul regelt beispielsweise den Zugriff auf die in dem Speichersystem 150 gespeicherten Daten.

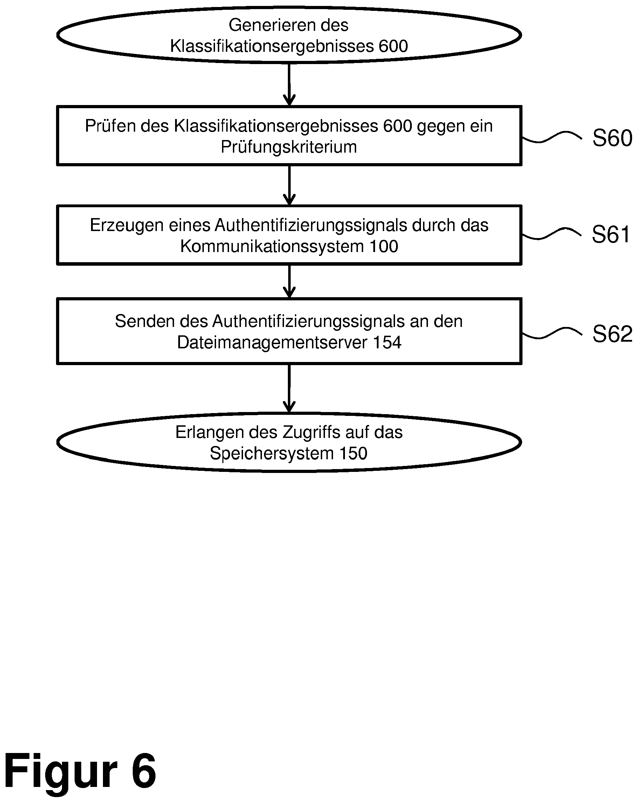

Figur 6 zeigt den schematischen Ablauf des Erlangens des Zugriffs auf das Speichersystem 150. Ist das Klassifikationsergebnis 600 generiert, wird das Klassifikationsergebnis 600 gegen ein Prüfungskriterium geprüft (S60). Das Prüfungskriterium kann beispielsweise einen Schwellenwert umfassen, welcher von dem Klassifikationsergebnis 600 überschritten werden muss, damit der Nutzer als authentifiziert gilt. Ist das Prüfungskriterium erfüllt, so ist die Authentifizierung erfolgreich und dem Nutzer wird der Zugriff auf das Speichersystem gewährt werden. Dazu wird in Schritt S61 ein Authentifizierungssignal durch das Kommunikationssystem 100 erzeugt.

Das erzeugte Authentifizierungssignal wird in Schritt S62 von dem Kommunikationssystem 100 an den Dateimanagementserver 154 gesendet. Der Dateimanagementserver 154 erteilt beispielsweise den Zugriff auf den oder die Speicher 152 des Speichersystems 150. In Ausführungsformen überprüft der Dateimanagementserver, welche Zugriffsrechte dem Kommunikationssystem zugewiesen sind.

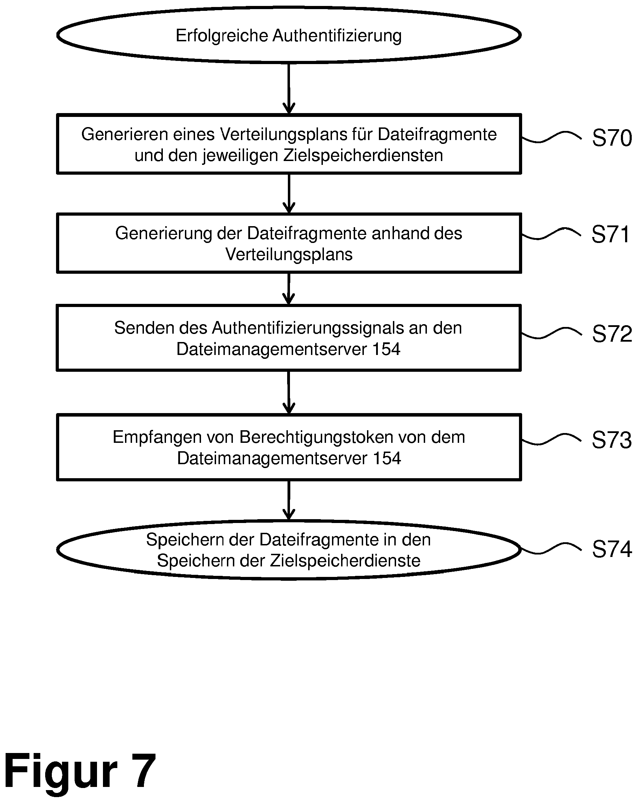

Figur 7 zeigt den schematischen Ablauf, um eine Datei in dem Speichersystem 150 zu speichern. Zunächst muss sich der Nutzer erfolgreich mittels seines mobilen, tragbaren Kommunikationssystems 100 authentifizieren, um Zugriff auf das Speichersystem 150 zu erlangen. In Schritt S70 wird dann ein Verteilungsplan für eine Mehrzahl von Dateifragmenten generiert. Jedes Dateifragment wird einem bestimmten Zielspeicherdienst zugewiesen, auf dessen Speicher es später gespeichert wird. Der Verteilungsplan kann beispielsweise von dem Kommunikationssystem 100 oder von dem Dateimanagementserver 154 erstellt werden.

In einer Ausführungsform wird die zu speichernde Datei vor dem Fragmentieren in Dateifragmente mit einem symmetrischen und/oder asymmetrischen kryptographischen Schlüssel verschlüsselt. Selbst wenn eine unberechtigte Person Zugriff auf alle zu einer Datei gehörenden Fragmente erlangt, müsste die unberechtigte Person zusätzlich im Besitz des richtigen Schlüssels sein, um die Datei öffnen bzw. ihren Inhalt auslesen zu können.

In einer weiteren Ausführungsform wird die Datei vor dem Fragmentieren mit einem symmetrischen Schlüssel verschlüsselt. Der symmetrische Schlüssel wird dabei mit in den Metadaten gespeichert. Diese Metadaten sind lediglich dem Kommunikationssystem 100 und/oder dem Dateimanagementserver 154 zugänglich. Die Metadaten werden zusätzlich mit dem öffentlichen Schlüssel eines asymmetrischen Schlüsselpaars verschlüsselt.

Die zu speichernde Datei wird in Schritt S71 anhand des Verteilungsplans in Dateifragmente zerlegt. Nun wird in Schritt S72 das Authentifizierungssignal an den Dateimanagementserver 154 gesendet, welcher als Antwort auf den Empfang des Authentifizierungssignals Berechtigungstoken an das Kommunikationssystem 100 sendet. Das Kommunikationssystem 100 empfängt für jedes Dateifragment einen Berechtigungstoken (S73). Die Dateifragmente werden entsprechend des Verteilungsplans und unter Verwendung der Berechtigungstoken in den in dem Verteilungsplan festgelegten Speichern 152 der Zielspeicherdienste gespeichert (S74).

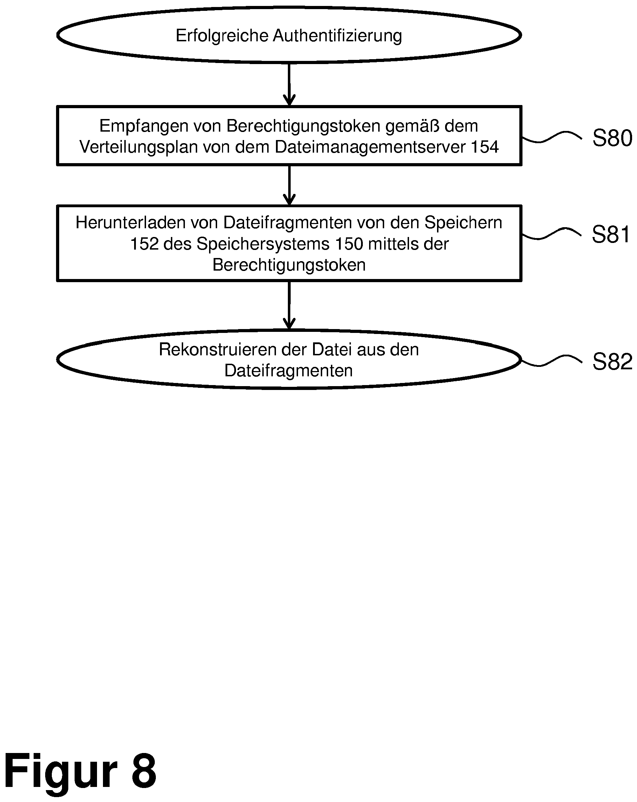

Figur 8 zeigt den schematischen Ablauf des Lesens von Dateien aus einem Speicher 152 des Speichersystems 150. Nach der erfolgreichen Authentifizierung des Kommunikationssystems 100 bzw. des Nutzers, empfängt das Kommunikationssystem 100 in Schritt S80 einen oder mehrere Berechtigungstoken von dem Dateimanagementserver 154. Die Berechtigungstoken können beispielsweise als URL ausgebildet sein, welche die Pfade von Dateifragmenten auf den jeweiligen Speichern 152 des Speichersystems 150 gemäß einem Verteilungsplan umfasst. Das Kommunikationssystem 100 greift beispielsweise über die Berechtigungstoken auf die jeweiligen Speicher 152 des Speichersystems 150 zu.

Mittels der Berechtigungstoken werden die Dateifragmente von den Speichern 152 der Speichersystems 150 in den Speicher des Kommunikationssystems 100 heruntergeladen (S81). Schließlich wird in Schritt S82 aus den Dateifragmenten die Datei rekonstruiert, auf die der Nutzer zugreifen will. In einer Ausführungsform wird eine Auswahl der Dateifragmente heruntergeladen, wobei die von der Auswahl umfassten Dateifragmente ausreichend für eine Rekonstruktion der Datei sind. Der Zugriff kann beispielsweise auf die Dateifragmente direkt erfolgen. Alternativ kann der Zugriff auch auf Metadaten erfolgen, mit welchen die Dateifragmente rekonstruiert werden. Die Metadaten können beispielsweise einen symmetrischen Schlüssel umfassen, mit welchem die Dateifragmente verschlüsselt sind. Ferner können die Metadaten selbst mit einem öffentlichen Schlüssel eines asymmetrischen Schlüsselpaares verschlüsselt sein.

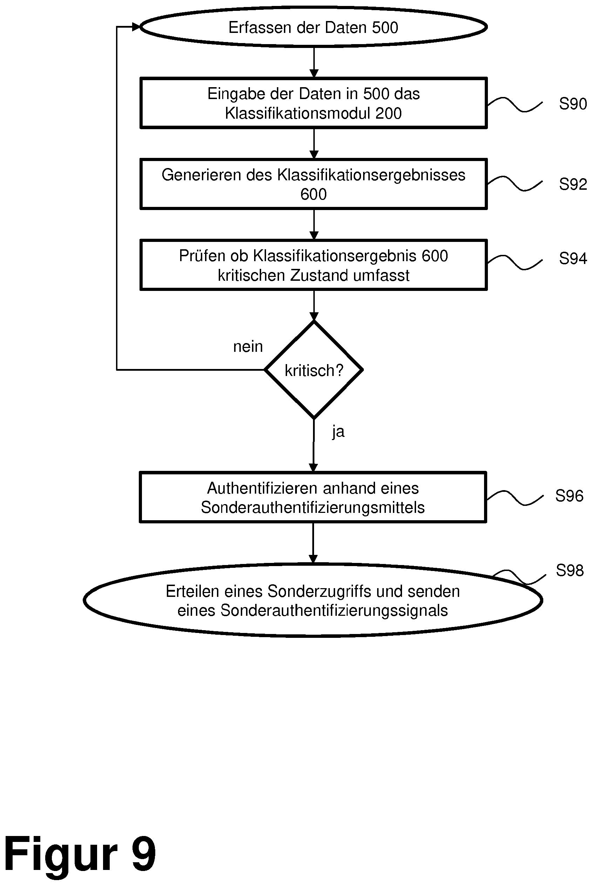

Figur 9 zeigt das schematische Verfahren zum Erlangen von Sonderzugriffsrechten mittels eines Sonderauthentifizierungsmittels. Das Sonderauthentifizierungsmittel kann beispielsweise als elektronischer Heilberufsausweis ausgebildet sein. Auf das Erfassen der nutzerbezogenen Daten 500 hin werden die Daten 500 in das Klassifikationsmodul 200 eingegeben (S90). Aus den Daten 500 wird in Schritt S92 (und analog zu Figur 2) das Klassifikationsergebnis 600 generiert. In Schritt S94 wird durch das Klassifikationsmodul 200 überprüft, ob ein kritische Zustand des Nutzers erkannt wurde.

Ein kritischer Zustand umfasst beispielsweise ein Versagen des Herz-KreislaufSystems, einen Herzinfarkt oder einen epileptischen Anfall. Ein kritischer Zustand kann beispielsweise anhand der nutzerbezogenen Daten, insbesondere von biometrischen und/oder physiologischen Daten, wie beispielsweise dem Puls, dem Blutdruck und oder anhand von grob- und/oder feinmotorischen Bewegungen erfasst werden. Beispielsweise kann eine Fallbewegung, also wenn der Nutzer auf den Boden fällt, als grobmotorische Bewegung unter Verwendung eines Beschleunigungssensors erkannt werden.

Liegt ein kritischer Zustand des Nutzers vor, so kann sich ein Besitzer eines Sonderauthentifizierungsmittels, beispielsweise der Inhaber eines elektronischen Heilberufsausweises, gegenüber dem Kommunikationssystem 100 und/oder dem Speichersystem 150 anhand seines Sonderauthentifizierungsmittels authentifizieren (S96). Diese Authentifizierung kann beispielsweise über eine kryptographisch gesicherte Verbindung erfolgen. Das Sonderauthentifizierungsmittel kann beispielsweise ein Zertifikat und/oder eine Signatur umfassen. Nach erfolgreicher Authentifizierung des Inhabers des Sonderauthentifizierungsmittels erlangt dieser - unter Umständen eingeschränkten - Zugriff auf die in dem Speichersystem gespeicherten Daten des Nutzers. Der Zugriff umfasst beispielsweise einen Lese- und/oder Schreibzugriff auf den Speicher des Speichersystems. Die gespeicherten Daten können beispielsweise Informationen bezüglich des Nutzers, seinen Allergien, Unverträglichkeiten, Vorerkrankungen umfassen oder Hinweise auf die Identität des Nutzers, beispielsweise seine Adresse und im Notfall zu benachrichtigende Personen beinhalten.

Der Besitzer des Sonderauthentifizierungsmittels kann auf verschiedene Weisen Zugriff auf die in dem Speichersystem gespeicherten Daten erlangen. Beispielsweise zeigt das Kommunikationssystem den Inhalt der für den kritischen Zustand relevanten Daten an oder der Besitzer des Sonderauthentifizierungsmittels erlangt über das Kommunikationssystem des Nutzers Zugriff auf die entsprechenden Daten. Auf das Erkennen eines kritischen Zustands hin wird beispielsweise der Zugriff unter Verwendung des Authentifizierungssignals auf die Daten gewährt und/oder einschränkt. Eine Einschränkung erfolgt, falls der Zugriff auf die Daten grundsätzlich gewährt und erst auf eine fehlgeschlagene Authentifizierung hin verwehrt wird. Beispielsweise wird in Abhängigkeit von dem Authentifizierungssignal der Zugriff auf bestimmte Daten verweigert.

Der Zugriff auf die Daten kann beispielsweise das Anzeigen von Erste Hilfe Maßnahmen, Handlungsanweisungen, etc. umfassen. Beispielsweise kann der Zugriff auf die Daten direkt innerhalb des Speichersystems erfolgen indem der Besitzer des Sonderauthentifizierungsmittels ein eigenständiges System, beispielsweise ein zweites mobiles, tragbares Kommunikationssystem, mit dem Speichersystem verbindet. Dazu können beispielsweise Verbindungsdaten verwendet werden, die auf eine erfolgreiche Authentifizierung mittels des Sonderauthentifizierungsmittels gegenüber dem Kommunikationssystem des hilfsbedürftigen Nutzers hin zur Verfügung gestellt werden. Ferner kann dem Besitzer des Sonderauthentifizierungsmittels beispielsweise der Verteilungsplan und/oder die Metadaten zur Verfügung gestellt werden, sodass er selbst auf die Daten des Nutzers in dem Speichersystem zugreifen kann, diese aus den entsprechenden Dateifragmenten zusammensetzt und gegebenenfalls entschlüsselt.

### Bezugszeichenliste

- 100:: Kommunikationssystem
- 120:: Speicher
- 130:: Prozessor
- 150:: Speichersystem
- 152:: Speicher
- 154:: Dateimanagementserver
- 156:: Netzwerk
- 200:: Klassifikationsmodul
- 210:: Musterfunktion
- 220:: Vergleichsdatensatz
- 230:: Vergleichsparameter
- 500:: Daten
- 520:: Klassifikationsparameter
- 540:: Konfidenzwerte
- 600:: Klassifikationsergebnis
- S20:: Erfassen der Daten
- S21:: Eingabe der Daten in das Klassifikationsmodul
- S22:: Generieren des Konfidenzwertes
- S23:: Speichern des Konfidenzwertes
- S24:: Auslesen des Konfidenzwertes
- S25:: Generieren des Klassifikationsergebnisses
- S26:: Auswerten des Klassifikationsergebnisses
- S30:: Erfassend er Daten
- S31:: Eingabe der Daten in das Klassifikationsmodul
- S32:: Generieren des Konfidenzwertes
- S33:: Speichern des Konfidenzwertes
- S34:: Trainieren des Klassifikationsmoduls
- S341:: Prüfen ob der Nutzer Authentifiziert ist
- S342:: Hinzufügen der Daten zu dem Vergleichsdatensatz
- S343:: Löschen der alten Daten
- S344:: Generieren neuer Vergleichsparameter
- S40:: Vergleichen der Daten
- S41:: Zuordnen der Klassifikationsparameter
- S42:: Bestimmen der Klassifikationsparameter
- S43:: Vergleichen der Klassifikationsparameter
- S44:: Generieren des Konfidenzwerts
- S60:: Prüfen des Klassifikationsergebnisses
- S61:: Erzeugen des Authentifizierungssignals
- S62:: Senden des Authentifizierungssignals
- S70:: Empfangen von Berechtigungstoken
- S71:: Herunterladen von Dateifragmenten
- S72:: Rekonstruieren der Datei
- S80:: Generieren eines Verteilungsplans
- S81:: Generieren der Dateifragmente
- S82:: Senden eines Authentifizierungsplans
- S83:: Empfangen von Berechtigungstoken
- S84:: Speichern der Dateifragmente
- S90:: Eingabe der Daten in das Klassifikationsmodul
- S92:: Generieren des Klassifikationsergebnisses
- S94:: kritischen Zustand Prüfen
- S96:: Authentifizieren
- S98:: Erlangen des Sonderzugriffs

## Patentansprüche

1. Verfahren zur Authentifizierung eines aktuellen Nutzers eines mobilen, tragbaren Kommunikationssystems (100) gegenüber einem Speichersystem (150) mittels einer verhaltensbasierten Authentifizierung, wobei das Kommunikationssystem (100) mindestens einen Sensor (110) zur Erfassung von nutzerbezogenen Daten (500) aufweist, wobei die nutzerbezogenen Daten Informationen bezüglich des Verhaltens des Nutzers umfassen,
wobei das Speichersystem (150) einen Speicher (152) umfasst,
wobei das Verfahren durch das Kommunikationssystem (100) ausgeführt umfasst:
- Generieren mindestens eines Klassifikationsergebnisses (600) unter Verwendung der nutzerbezogenen Daten für die verhaltensbasierte Authentifizierung,
- Auswerten des mindestens einen Klassifikationsergebnisses (600), um den Nutzer zu authentifizieren, wobei das Auswerten ein Prüfen umfasst, ob das Klassifikationsergebnis (600) ein vorgegebenes Prüfungskriterium (800) erfüllt, wobei eine erfolgreiche Authentifizierung ein erfüllen des Prüfungskriteriums umfasst,
- Erzeugen eines Authentifizierungssignals aufgrund des Ergebnisses der Auswertung des Klassifikationsergebnisses und Senden des Authentifizierungssignals an das Speichersystem (150),
- Erlangen von Zugriff auf den Speicher (152) des Speichersystems (150), falls das Authentifizierungssignal eine erfolgreiche Authentifizierung des Nutzers angibt,
wobei die nutzerbezogenen Daten (500) Bewegungsdaten einer Bewegung des Kommunikationssystems (100) umfassen, wobei die Bewegung des Kommunikationssystems (100) durch eine grob- und/oder feinmotorische Bewegung des aktuellen Nutzers des Kommunikationssystems (100) verursacht wird, während der Nutzer das Kommunikationsgerät bei sich trägt,
wobei der Sensor (110) zur Erfassung der Bewegung des Kommunikationssystems (100) konfiguriert ist, wobei die verhaltensbasierte Authentifizierung von dem Kommunikationssystem (100) durchgeführt wird, welches ferner ein Klassifikationsmodul (200), einen Prozessor (130) und einen internen Speicher (120) aufweist,
wobei das Klassifikationsmodul (200) zur Klassifikation des Verhaltens des aktuellen Nutzers anhand der nutzerbezogenen Daten konfiguriert ist, wobei das Klassifikationsmodul (200) ferner zur Erkennung eines generischen Bewegungsmusters mit Hilfe von Trainingsdatensätzen einer Nutzerkohorte trainiert ist, wobei das Klassifikationsmodul (200) durch den Prozessor (130) des Kommunikationssystems (100) ausgeführt wird,
wobei die verhaltensbasierte Authentifizierung die folgenden Schritte aufweist:
- Wiederholtes Ausführen des Generierens eines Konfidenzwertes, wobei das Generieren des Konfidenzwertes die folgenden Schritte umfasst:
• Erfassen der nutzerbezogenen Daten (500) durch den mindestens einen internen Sensor (110) des Kommunikationssystems (100),
• Eingabe der Daten (500) in das Klassifikationsmodul (200),
• Generieren mindestens eines ersten Konfidenzwertes (540) durch das Klassifikationsmodul (200),
• Speichern des mindestens einen ersten Konfidenzwertes (540) in dem Speicher (120) des Kommunikationssystems (100),
- auf eine Authentifizierungsanfrage hin, Zugreifen auf den Speicher (120) des Kommunikationssystems (100), um mindestens einen der generierten und gespeicherten ersten Konfidenzwerte (540) aus dem Speicher (120) auszulesen,
- Generieren des mindestens einen Klassifikationsergebnisses (600) unter Verwendung des mindestens einen ersten Konfidenzwertes (540).

2. Verfahren nach Anspruch 1, wobei das Kommunikationssystem (100) ein Klassifikationsmodul (200), einen Prozessor (130) und einen internen Speicher (120) aufweist,
wobei die nutzerbezogenen Daten (500) Bewegungsdaten einer grobmotorischen Bewegung des aktuellen Nutzers des Kommunikationssystems (100) umfassen,
wobei das Klassifikationsmodul (200) zur Klassifikation des Verhaltens des aktuellen Nutzers anhand der nutzerbezogenen Daten konfiguriert ist, wobei das Klassifikationsmodul (200) ferner zur Erkennung eines generischen grobmotorischen Bewegungsmusters mit Hilfe von Trainingsdatensätzen einer Nutzerkohorte trainiert ist, wobei das Klassifikationsmodul (200) durch den Prozessor (130) des Kommunikationssystems (100) ausgeführt wird,
wobei die verhaltensbasierte Authentifizierung die folgenden Schritte aufweist:
- Wiederholtes Ausführen des Generierens eines Konfidenzwertes, wobei das Generieren des Konfidenzwertes die folgenden Schritte umfasst:
• Erfassen der nutzerbezogenen Daten (500) durch den mindestens einen Sensor (110) des Kommunikationssystems (100),
• Eingabe der Daten (500) in das Klassifikationsmodul (200),
• Generieren mindestens eines ersten Konfidenzwertes (540) durch das Klassifikationsmodul (200),
• Speichern des mindestens einen ersten Konfidenzwertes (540) in dem Speicher (120) des Kommunikationssystems (100),
- auf eine Authentifizierungsanfrage hin, Zugreifen auf den Speicher (120) des Kommunikationssystems (100), um mindestens einen der generierten und gespeicherten ersten Konfidenzwerte (540) aus dem Speicher (120) auszulesen,
- Generieren des mindestens einen Klassifikationsergebnisses (600) unter Verwendung des mindestens einen ersten Konfidenzwertes (540).

3. Verfahren nach einem der vorherigen Ansprüche, wobei die nutzerbezogenen Daten (500) ferner umfassen:
- Positionsdaten des Kommunikationssystems (100), welche durch ein Verfahren zur Positionsbestimmung durch einen Sensor (110) zur Bestimmung der Position des Kommunikationssystems (100) erfasst werden, und/oder
- Anwendungsnutzungsdaten des aktuellen Nutzers (1), wobei die Anwendungsnutzungsdaten Informationen über ein Nutzen von Anwendungsprogrammen durch den Nutzer umfassen, und/oder
- biometrischen Daten des aktuellen Nutzers (1), welche durch einen Sensor (110) zur Erfassung von biometrischen Daten erfasst werden, und/oder
- Verbindungsdaten des Kommunikationssystems (100) mit anderen Geräten und/oder
- Kalender- und/oder Uhrzeitdaten einer im Kommunikationssystem (100) implementierten Uhr oder einer externen Uhr, deren Signal durch einen Sensor (110) des Kommunikationssystems (100) empfangen wird, und/oder
- Feinmotorische Bewegungsdaten des Nutzers, wobei die feinmotorischen Bewegungsdaten mittels eines Sensors zur Erfassung von feinmotorischen Bewegungsdaten oder mittels eines Eingabemittels erfasst werden, wobei das Klassifikationsmodul (200) ferner zur Erkennung eines generischen feinmotorischen Bewegungsmusters mit Hilfe von Trainingsdatensätzen einer Nutzerkohorte trainiert ist.

4. Verfahren nach einem der vorherigen Ansprüche, wobei in dem Speicher (120) des Kommunikationssystems (100) mindestens ein Muster in Form einer Musterfunktion (210) und mindestens ein Vergleichsdatensatz (220) gespeichert sind,
wobei der Vergleichsdatensatz (220) eine Mehrzahl der nutzerbezogenen Daten (500) umfasst, wobei aus der Mehrzahl der nutzerbezogenen Daten (500) des ersten Vergleichsdatensatzes (220) mindestens ein erster Vergleichsparameter (230) errechnet wird,
wobei das Klassifikationsmodul (200) auf die Eingabe der nutzerbezogenen Daten (500) hin die folgenden Schritte ausführt:
- Bestimmen eines Klassifikationsparameters für jeden Parameter, den die nutzerbezogenen Daten umfassen, wobei das Bestimmen der Klassifikationsparameter aus den grobmotorischen Bewegungsdaten und/oder feinmotorischen Bewegungsdaten ein Vergleichen der erfassten grobmotorischen Bewegungsdaten und/oder feinmotorischen Bewegungsdaten mit der mindestens einen Musterfunktion (210), ein Zuordnen der nutzerbezogenen Daten (500) zu dem der Musterfunktion (210) zugeordneten ersten Muster und ein Erhalten von mindestens einem dem ersten Muster entsprechenden Klassifikationsparameter (230) umfasst, falls die Bewegungsdaten dem mindestens einen, ersten Muster zugeordnet werden können,
- Errechnen eines ersten Konfidenzwertes (540) für jeden Klassifikationsparameter (230) durch einen Vergleich des mindestens einen Klassifikationsparameters (230) mit dem jeweiligen Vergleichsparameter (230) des Vergleichsdatensatzes (220).

5. Verfahren nach einem der vorherigen Ansprüche, wobei die verhaltensbasierte Authentifizierung ferner das Trainieren des Klassifikationsmoduls (200) mit den nutzerbezogenen Daten (500) des aktuellen Nutzers umfasst, wobei das Klassifikationsmodul (200) auf das Verhalten des aktuellen Nutzers unter der Voraussetzung trainiert wird, dass gemäß dem Klassifikationsergebnis (600) der aktuelle Nutzer ein (100) registrierter Nutzer ist, wobei das Trainieren ein Hinzufügen der nutzerbezogenen Daten (500) zu dem Vergleichsdatensatz umfasst, wobei das Trainieren ferner ein Entfernen der nutzerbezogenen Daten (500), welche Teil des ersten Vergleichsdatensatzes (220) und ein vorgegebenes Mindestalter überschreiten, aus dem ersten Vergleichsdatensatz umfasst.

6. Verfahren nach Anspruch 5, wobei die aus dem Vergleichsdatensatz entfernten nutzerbezogenen Daten in dem Speicher des Speichersystems gespeichert werden.

7. Verfahren nach einem der vorherigen Ansprüche, wobei die ersten Konfidenzwerte (540) zu einem resultierenden Konfidenzwert durch den Prozessor (130) des tragbaren Kommunikationssystems (100) verarbeitet werden, wobei der resultierende Konfidenzwert eine Wahrscheinlichkeit angibt, mit der die Identität des aktuellen Nutzers mit der Identität des (100) registrierten Nutzers übereinstimmt.

8. Verfahren nach einem der vorherigen Ansprüche, wobei die einzelnen ersten Konfidenzwerte (540) der Klassifikationsparameter (520) bei der Auswertung mit jeweils einem Gewichtungsfaktor versehen sind, wobei die Gewichtungsfaktoren dem jeweiligen ersten Konfidenzwert (540) zugeordnet werden.

9. Verfahren nach einem der vorherigen Ansprüche, wobei das Prüfungskriterium (800) erfüllt ist, falls:
- mindestens ein Klassifikationsergebnis (600) einen durch das Prüfungskriterium (800) vorgegebenen Schwellenwert überschreitet und/oder
- ein durch das Prüfungskriterium (800) vorgegebenes Höchstalter des mindestens einen Klassifikationsergebnisses (600) nicht überschritten wird.

10. Verfahren nach einem der vorherigen Ansprüche, wobei auf dem Kommunikationssystem (100) mehrere Nutzer registriert sind und ein Klassifikationsergebnis (600) für jeden Nutzer generiert wird, wobei das Klassifikationsmodul (200) dazu konfiguriert ist den aktuellen Nutzer als einen der registrierten Nutzer zu identifizieren.

11. Verfahren nach Anspruch 10, wobei das Klassifikationsmodul (200) konfiguriert ist einen Nutzerwechsel anhand einer grob- und/oder feinmotorischen Bewegung zu erkennen,
wobei die verhaltensbasierte Authentifizierung ferner umfasst:
- Wiederholtes Ausführen der Schritte:
• Generieren mindestens eines zweiten Konfidenzwertes (600) durch das Klassifikationsmodul (200),
• Speichern des mindestens einen zweiten Konfidenzwertes (540) in dem Speicher (120) des Kommunikationssystems (100),
- auf eine Authentifizierungsanfrage hin, Zugreifen auf den Speicher (120) des Kommunikationssystems (100), um mindestens einen der gespeicherten zweiten Konfidenzwerte (540) aus dem Speicher (120) auszulesen,
- Auswerten des mindestens einen zweiten Konfidenzwertes (540), um zu überprüfen, ob ein Nutzerwechsel stattgefunden hat,
- Verwerfen der bisherigen Konfidenzwerte (540), falls ein Nutzerwechsel stattgefunden hat.

12. Verfahren nach einem der vorherigen Ansprüche, wobei das Speichersystem mehrere Speicher und einen Dateimanagementserver umfasst,
wobei zumindest eine Datei von dem Kommunikationssystem (100) auf die Speicher des Speichersystems verteilt gespeichert wurde, wobei das verteilte Speichern umfasst:
- automatische Generierung eines Verteilungsplans, der Instruktionen zur Generierung von Dateifragmenten der Datei mittels eines Fehlerkorrekturverfahrens und Identifikatoren der mehreren Speicher des Speichersystems, in denen die generierten Dateifragmente gespeichert werden sollen, enthält, durch den Dateimanagementserver oder durch das Kommunikationssystem (100),
- Durchführung des in dem Verteilungsplan spezifizierten Fehlerkorrekturverfahrens zur Generierung der Dateifragmente aus der Datei durch das Kommunikationssystem (100),
- Senden des Authentifizierungssignals des Kommunikationssystems (100) zum Speichern der Dateifragmente in den im Verteilungsplan identifizierten mehreren Speichern des Speichersystems an den Dateimanagementserver über ein Netzwerk,
- in Antwort auf den Empfang des Authentifizierungssignals, Anforderung eines Berechtigungstokens durch den Dateimanagementserver von jedem der in dem Verteilungsplan identifizierten mehreren Speichern des Speichersystems und Weiterleitung der in Antwort auf die Anforderung erhaltenen Berechtigungstoken durch den Dateimanagementserver an das Kommunikationssystem (100), und
- Speichern der generierten Dateifragmente in den Speichern des Speichersystems über das Netzwerk mittels Berechtigungsnachweis durch die Berechtigungstoken unter Umgehung des Dateimanagementservers durch das Kommunikationssystem (100).

13. Verfahren nach einem der vorherigen Ansprüche, wobei das Klassifikationsmodul auf ein Erkennen eines kritischen Zustands anhand der nutzerbezogenen Daten des Nutzers trainiert ist,
wobei das Kommunikationssystem (100) eine Schnittstelle aufweist, wobei das Kommunikationssystem (100) dazu konfiguriert ist über die Schnittstelle mit einem Sonderauthentifizierungsmittel zu kommunizieren, wobei ein Besitzer des Sonderauthentifizierungsmittels Sonderzugriff auf das Speichersystem (150) erlangt, wobei das Erlangen des Sonderzugriffs die folgenden Schritte umfasst:
- Erkennen eines kritischen Zustands des Nutzers anhand der nutzerbezogenen Daten,
- auf das Erkennen des kritischen Zustandes des Nutzers hin, senden eines Sonderauthentifizierungssignals an das Speichersystem (150),
- Aufbauen einer kryptographisch gesicherten Verbindung zwischen dem Sonderauthentifizierungsmittel und dem Kommunikationssystem (100),
- Authentifizieren des Besitzers des Sonderauthentifizierungsmittels,
- Erlangen des Sonderzugriffs auf den Speicher des Speichersystems, falls das Kommunikationssystem (100) ein Sonderauthentifizierungssignal gesendet hat und sich der Besitzer des Sonderauthentifizierungsmittels authentifizieren konnte.

14. Mobiles, tragbares Kommunikationssystem (100) zur Authentifizierung eines aktuellen Nutzers des Kommunikationssystems (100) gegenüber einem Speichersystem (150), umfassend einen Prozessor (130), eine Netzwerkschnittstelle zur operativen Kopplung des Kommunikationssystems (100) an das Speichersystem (150) über ein Netzwerk (178), wobei das Kommunikationssystem (100) einen internen Speicher (120) mit Programminstruktionen umfasst, wobei ein Ausführen der Programminstruktionen durch den Prozessor (130) des Kommunikationssystems (100) das Kommunikationssystem (100) dazu veranlasst das folgende Verfahren auszuführen:
- Generieren mindestens eines Klassifikationsergebnisses (600) unter Verwendung der nutzerbezogenen Daten für die verhaltensbasierte Authentifizierung,
- Auswerten des mindestens einen Klassifikationsergebnisses (600), um den Nutzer zu authentifizieren, wobei das Auswerten ein Prüfen umfasst, ob das Klassifikationsergebnis (600) ein vorgegebenes Prüfungskriterium (800) erfüllt, wobei eine erfolgreiche Authentifizierung ein erfüllen des Prüfungskriteriums umfasst,
- Erzeugen eines Authentifizierungssignals aufgrund des Ergebnisses der Auswertung des Klassifikationsergebnisses und Senden des Authentifizierungssignals an das Speichersystem (150),
- Erlangen von Zugriff auf den Speicher (152) des Speichersystems (150), falls das Authentifizierungssignal eine erfolgreiche Authentifizierung des Nutzers angibt,
wobei die nutzerbezogenen Daten (500) Bewegungsdaten einer Bewegung des Kommunikationssystems (100) umfassen, wobei die Bewegung des Kommunikationssystems (100) durch eine grob- und/oder feinmotorische Bewegung des aktuellen Nutzers des Kommunikationssystems (100) verursacht wird, während der Nutzer das Kommunikationsgerät bei sich trägt,
wobei der Sensor (110) zur Erfassung der Bewegung des Kommunikationssystems (100) konfiguriert ist, wobei die verhaltensbasierte Authentifizierung von dem Kommunikationssystem (100) durchgeführt wird, welches ferner ein Klassifikationsmodul (200) und einen internen Speicher (120) aufweist,
wobei das Klassifikationsmodul (200) zur Klassifikation des Verhaltens des aktuellen Nutzers anhand der nutzerbezogenen Daten konfiguriert ist, wobei das Klassifikationsmodul (200) ferner zur Erkennung eines generischen Bewegungsmusters mit Hilfe von Trainingsdatensätzen einer Nutzerkohorte trainiert ist, wobei das Klassifikationsmodul (200) durch den Prozessor (130) des Kommunikationssystems (100) ausgeführt wird,
wobei die verhaltensbasierte Authentifizierung die folgenden Schritte aufweist:
- Wiederholtes Ausführen des Generierens eines Konfidenzwertes, wobei das Generieren des Konfidenzwertes die folgenden Schritte umfasst:
• Erfassen der nutzerbezogenen Daten (500) durch den mindestens einen internen Sensor (110) des Kommunikationssystems (100),
• Eingabe der Daten (500) in das Klassifikationsmodul (200),
• Generieren mindestens eines ersten Konfidenzwertes (540) durch das Klassifikationsmodul (200),
• Speichern des mindestens einen ersten Konfidenzwertes (540) in dem Speicher (120) des Kommunikationssystems (100),
- auf eine Authentifizierungsanfrage hin, Zugreifen auf den Speicher (120) des Kommunikationssystems (100), um mindestens einen der generierten und gespeicherten ersten Konfidenzwerte (540) aus dem Speicher (120) auszulesen,
Generieren des mindestens einen Klassifikationsergebnisses (600) unter Verwendung des mindestens einen ersten Konfidenzwertes (540).

15. System umfassend ein mobiles Kommunikationssystem (100) nach Anspruch 14 und ein Speichersystem (150), wobei das System zur Authentifizierung eines aktuellen Nutzers des Kommunikationssystems (100) gegenüber dem Speichersystem (150) konfiguriert ist, wobei das Speichersystem (150) zumindest einen Speicher (152) umfasst, wobei der Speicher (152) dazu konfiguriert ist, Dateien zu speichern, die das Speichersystem (150) von dem Kommunikationssystem (100) empfängt.

## Claims

1. A method for authenticating a current user of a mobile, portable communication system (100) to a storage system (150) by means of a behaviour-based authentication, wherein the communication system (100) has at least one sensor (110) for capturing user-related data (500), wherein the user-related data comprise information regarding the behaviour of the user,
wherein the storage system (150) comprises a memory (152),
wherein the method performed by the communication system (100) comprises the steps of:
- generating at least one classification result (600) with use of the user-related data for the behaviour-based authentication,
- evaluating the at least one classification result (600) in order to authenticate the user, wherein the evaluation comprises checking whether the classification result (600) fulfils a predefined inspection criterion (800), wherein a successful authentication comprises a fulfilment of the inspection criterion,
- generating an authentication signal on the basis of the result of the evaluation of the classification result and sending the authentication signal to the storage system (150),
- granting access to the memory (152) of the storage system (150) if the authentication signal indicates a successful authentication of the user,
wherein the user-related data (500) comprise movement data regarding a movement of the communication system (100), wherein the movement of the communication system (100) is caused by a gross-motor and/or fine-motor movement of the current user of the communication system (100) whilst the user carries the communication device with him,
wherein the sensor (110) is configured to capture the movement of the communication system (100), wherein the behaviour-based authentication is performed by the communication system (100), which also has a classification module (200), a processor (130), and an internal memory (120),
wherein the classification module (200) is configured to classify the behaviour of the current user on the basis of the user-related data, wherein the classification module (200) is also trained to identify a generic movement pattern with the aid of training datasets of a user cohort, wherein the classification module (200) is executed by the processor (130) of the communication system (100),
wherein the behaviour-based authentication has the following steps:
- repeatedly executing the generation of a confidence value, wherein the generation of the confidence value comprises the following steps:
• capturing the user-related data (500) by the at least one internal sensor (110) of the communication system (100),
• inputting the data (500) into the classification module (200),
• generating at least one first confidence value (540) by the classification module (200),
• storing the at least one first confidence value (540) in the memory (120) of the communication system (100),
- in response to an authentication request, accessing the memory (120) of the communication system (100) in order to read out at least one of the generated and stored first confidence values (540) from the memory (120),
- generating the at least one classification result (600) with use of the at least one first confidence value (540).

2. The method according to claim 1, wherein the communication system (100) has a classification module (200), a processor (130), and an internal memory (120),
wherein the user-related data (500) comprise movement data of a gross-motor movement of the current user of the communication system (100),
wherein the classification module (200) is configured to classify the behaviour of the current user on the basis of the user-related data, wherein the classification module (200) is also trained to identify a generic gross-motor movement pattern with the aid of training datasets of a user cohort, wherein the classification module (200) is executed by the processor (130) of the communication system (100),
wherein the behaviour-based authentication has the following steps:
- repeatedly executing the generation of a confidence value, wherein the generation of the confidence value comprises the following steps:
• capturing the user-related data (500) by the at least one sensor (110) of the communication system (100),
• inputting the data (500) into the classification module (200),
• generating at least one first confidence value (540) by the classification module (200),
• storing the at least one first confidence value (540) in the memory (120) of the communication system (100),
- in response to an authentication request, accessing the memory (120) of the communication system (100) in order to read out at least one of the generated and stored first confidence values (540) from the memory (120),
- generating the at least one classification result (600) with use of the at least one first confidence value (540).

3. The method according to one of the preceding claims, wherein the user-related data (500) also comprise:
- position data of the communication system (100) which are captured by a method for position determination by a sensor (110) to determine the position of the communication system (100), and/or
- application usage data of the current user (1), wherein the application usage data comprise information regarding a use of application programs by the user, and/or
- biometric data of the current user (1) which are captured by a sensor (110) for capturing biometric data, and/or
- connection data of the communication system (100) to other devices, and/or
- calendar and/or time data of a clock implemented in the communication system (100) or an external clock, the signal of which is received by a sensor (110) of the communication system (100), and/or
- fine-motor movement data of the user, wherein the fine-motor movement data are captured by means of a sensor for capturing fine-motor movement data or by means of an input means, wherein the classification module (200) is also trained to identify a generic fine-motor movement pattern with the aid of training datasets of a user cohort.

4. The method according to one of the preceding claims, wherein at least one pattern in the form of a pattern function (210) and at least one comparison dataset (220) are stored in the memory (120) of the communication system (100),
wherein the comparison dataset (220) comprises a plurality of the user-related data items (500), wherein at least one first comparison parameter (230) is calculated from the plurality of the user-related data items (500) of the first comparison dataset (220),
wherein the classification module (200) performs the following steps in response to the input of the user-related data (500):
- determining a classification parameter for each parameter comprised by the user-related data, wherein the determination of the classification parameters from the gross-motor movement data and/or fine-motor movement data comprises a comparison of the captured gross-motor movement data and/or fine-motor movement data with the at least one pattern function (210), an association of the user-related data (500) with the first pattern associated with the pattern function (210), and receiving at least one classification parameter (230) corresponding to the first pattern if the movement data can be associated with the at least one first pattern,
- calculating a first confidence value (540) for each classification parameter (230) by a comparison of the at least one classification parameter (230) with the relevant comparison parameter (230) of the comparison dataset (220).

5. The method according to one of the preceding claims, wherein the behaviour-based authentication also comprises training the classification module (200) with the user-related data (500) of the current user, wherein the classification module (200) is trained on the behaviour of the current user on the proviso that, in accordance with the classification result (600), the current user is a (100) registered user, wherein the training comprises adding the user-related data (500) to the comparison dataset, wherein the training also comprises removing from the first comparison dataset any user-related data (500) that exceed part of the first comparison dataset (220) and a predefined minimum age.

6. The method according to claim 5, wherein the user-related data removed from the comparison dataset are stored in the memory of the storage system.

7. The method according to one of the preceding claims, wherein the first confidence values (540) are processed by the processor (130) of the portable communication system (100) to give a resulting confidence value, wherein the resulting confidence value specifies a likelihood with which the identity of the current user matches the identity of the (100) registered user.

8. The method according to one of the preceding claims, wherein the individual first confidence values (540) of the classification parameters (520) for the evaluation are each provided with a weighting factor, wherein the weighting factors are associated with the corresponding first confidence value (540).

9. The method according to one of the preceding claims, wherein the inspection criterion (800) is fulfilled if:
- at least one classification result (600) exceeds a threshold value predefined by the inspection criterion (800) and/or
- a maximum age of the at least one classification result (600) is not exceeded by the inspection criterion (800).

10. The method according to one of the preceding claims, wherein multiple users are registered on the communication system (100) and a classification result (600) is generated for each user, wherein the classification module (200) is configured to identify the current user as one of the registered users.

11. The method according to claim 10, wherein the classification module (200) is configured to identify a change of user on the basis of a gross-motor and/or fine-motor movement,
wherein the behaviour-based authentication also comprises:
- repeatedly performing the steps of:
• generating at least one second confidence value (600) by the classification module (200),
• storing the at least one second confidence value (540) in the memory (120) of the communication system (100),
- in response to an authentication request, accessing the memory (120) of the communication system (100) in order to read out at least one of the stored second confidence values (540) from the memory (120),
- evaluating the at least one second confidence value (540) in order to check whether a change of user has occurred,
- discarding the previous confidence values (540) if a change of user has occurred.

12. The method according to one of the preceding claims, wherein the storage system comprises a plurality of memories and a file management server, wherein at least one file from the communication system (100) has been stored distributed on the memories of the storage system, wherein the distributed storage comprises the steps of:
- automatically generating, by the file management server or by the communication system (100), a distribution plan which contains instructions for generating file fragments of the file by means of an error correction process and identifiers of the plurality of memories of the storage system in which the generated file fragments are to be stored,
- performing the error correction process specified in the distribution plan to generate the file fragments from the file by the communication system (100),
- sending the authentication signal of the communication system (100) to store the file fragments in the plurality of memories of the storage system identified in the distribution plan to the file management server via a network,
- in response to the receipt of the authentication signal, requesting an authorisation token by the file management server from each of the plurality of memories of the storage system identified in the distribution plan and forwarding the authorisation token obtained in response to the request by the file management server to the communication system (100), and
- storing, by the communication system (100), the generated file fragments in the memories of the storage system via the network by means of proof of authority by the authorisation token with a bypassing of the file management server.

13. The method according to one of the preceding claims, wherein the classification module is trained to identify a critical state on the basis of the user-related data of the user,
wherein the communication system (100) has an interface, wherein the communication system (100) is configured to communicate with a special authentication means via the interface, wherein an owner of the special authentication means is granted special access to the storage system (150), wherein the granting of the special access comprises the following steps:
- identifying a critical state of the user on the basis of the user-related data,
- upon identification of the critical state of the user, sending a special authentication signal to the storage system (150),
- establishing a cryptographically secured connection between the special authentication means and the communication system (100),
- authenticating the owner of the special authentication means,
- granting the special access to the memory of the storage system if the communication system (100) has sent a special authentication signal and the owner of the special authentication means could be authenticated.

14. A mobile, portable communication system (100) for authenticating a current user of the communication system (100) to a storage system (150), comprising a processor (130) and a network interface for operatively coupling the communication system (100) to the storage system (150) via a network (178), wherein the communication system (100) comprises an internal memory (120) with program instructions, wherein an execution of the program instructions by the processor (130) of the communication system (100) prompts the communication system (100) to perform the following method:
- generating at least one classification result (600) with use of the user-related data for the behaviour-based authentication,
- evaluating the at least one classification result (600) in order to authenticate the user, wherein the evaluation comprises checking whether the classification result (600) fulfils a predefined inspection criterion (800), wherein a successful authentication comprises a fulfilment of the inspection criterion,
- generating an authentication signal on the basis of the result of the evaluation of the classification result and sending the authentication signal to the storage system (150),
- granting access to the memory (152) of the storage system (150) if the authentication signal indicates a successful authentication of the user,
wherein the user-related data (500) comprise movement data regarding a movement of the communication system (100), wherein the movement of the communication system (100) is caused by a gross-motor and/or fine-motor movement of the current user of the communication system (100) whilst the user carries the communication device with him,
wherein the sensor (110) is configured to capture the movement of the communication system (100), wherein the behaviour-based authentication is performed by the communication system (100), which also has a classification module (200) and an internal memory (120),
wherein the classification module (200) is configured to classify the behaviour of the current user on the basis of the user-related data, wherein the classification module (200) is also trained to identify a generic movement pattern with the aid of training datasets of a user cohort, wherein the classification module (200) is executed by the processor (130) of the communication system (100),
wherein the behaviour-based authentication has the following steps:
- repeatedly executing the generation of a confidence value, wherein the generation of the confidence value comprises the following steps:
• capturing the user-related data (500) by the at least one internal sensor (110) of the communication system (100),
• inputting the data (500) into the classification module (200),
• generating at least one first confidence value (540) by the classification module (200),
• storing the at least one first confidence value (540) in the memory (120) of the communication system (100),
- in response to an authentication request, accessing the memory (120) of the communication system (100) in order to read out at least one of the generated and stored first confidence values (540) from the memory (120), generating the at least one classification result (600) with use of the at least one first confidence value (540).

15. A system comprising a mobile communication system (100) according to claim 14 and a storage system (150), wherein the system is configured to authenticate a current user of the communication system (100) to the storage system (150), wherein the storage system (150) comprises at least one memory (152), wherein the memory (152) is configured to store files which the storage system (150) receives from the communication system (100).

## Revendications

1. Procédé d'authentification d'un utilisateur actuel d'un système de communication (100) mobile portable vis-à-vis d'un système de stockage (150) au moyen d'une authentification basée sur le comportement, dans lequel le système de communication (100) présente au moins un capteur (110) permettant la détection de données (500) relatives à l'utilisateur, où les données relatives à l'utilisateur comprennent des informations concernant le comportement de l'utilisateur,
dans lequel le système de stockage (150) comprend une mémoire (152),
le procédé exécuté par le système de communication (100) comprenant :
- la génération d'au moins un résultat de classification (600) moyennant l'emploi des données relatives à l'utilisateur pour l'authentification basée sur le comportement,
- l'évaluation de l'au moins un résultat de classification (600) afin d'authentifier l'utilisateur, où l'évaluation comprend une vérification si le résultat de classification (600) satisfait à un critère de vérification (800) prédéfini, où une authentification réussie comprend la satisfaction au critère de vérification,
- la création d'un signal d'authentification suite au résultat de l'évaluation du résultat de classification et l'envoi du signal d'authentification au système de stockage (150),
- l'acquisition de l'accès à la mémoire (152) du système de stockage (150) dans le cas où le signal d'authentification indique une authentification réussie de l'utilisateur,
dans lequel les données (500) relatives à l'utilisateur comprennent des données de déplacement d'un déplacement du système de communication (100), où le déplacement du système de communication (100) est provoqué par un déplacement de motricité grossière et/ou fine de l'utilisateur actuel du système de communication (100) pendant que l'utilisateur transporte l'appareil de communication avec lui,
dans lequel le capteur (110) est conçu pour la détection du déplacement du système de communication (100), où l'authentification basée sur le comportement est effectuée par le système de communication (100), lequel présente en outre un module de classification (200), un processeur (130) et une mémoire (120) interne,
dans lequel le module de classification (200) est conçu pour la classification du comportement de l'utilisateur actuel à 'aide des données relatives à l'utilisateur, où le module de classification (200) est en outre entraîné pour la reconnaissance d'un modèle de déplacement générique à l'aide d'ensembles de données d'entraînement d'une cohorte d'utilisateurs, où le module de classification (200) est exécuté par le processeur (130) du système de communication (100),
dans lequel l'authentification basée sur le comportement présente les étapes suivantes :
- l'exécution répétée de la génération d'une valeur de confiance, où la génération de la valeur de confiance comprend les étapes suivantes :
• la détection des données (500) relatives à l'utilisateur par l'au moins un capteur interne (110) du système de communication (100),
• l'entrée des données (500) dans le module de classification (200),
• la génération d'au moins une première valeur de confiance (540) par le module de classification (200),
• le stockage de l'au moins une première valeur de confiance (540) dans la mémoire (120) du système de communication (100),
- suite à une demande d'authentification, l'accès à la mémoire (120) du système de communication (100) afin de lire au moins une des premières valeurs de confiance (540) générées et stockées à partir de la mémoire (120),
- la génération de l'au moins un résultat de classification (600) moyennant l'emploi de l'au moins une première valeur de confiance (540).

2. Procédé selon la revendication 1, dans lequel le système de communication (100) présente un module de classification (200), un processeur (130) et une mémoire (120) interne,
dans lequel les données (500) relatives à l'utilisateur comprennent des données de déplacement d'un déplacement de motricité grossière de l'utilisateur actuel du système de communication (100),
dans lequel le module de classification (200) est conçu pour la classification du comportement de l'utilisateur actuel au moyen des données relatives à l'utilisateur, où le module de classification (200) est en outre entraîné pour la reconnaissance d'un modèle de déplacement de motricité grossière générique à l'aide d'ensembles de données d'entraînement d'une cohorte d'utilisateurs, où le module de classification (200) est exécuté par le processeur (130) du système de communication (100),
dans lequel l'authentification basée sur le comportement présente les étapes suivantes :
- l'exécution répétée de la génération d'une valeur de confiance, où la génération de la valeur de confiance comprend les étapes suivantes :
• la détection des données (500) relatives à l'utilisateur par l'au moins un capteur (110) du système de communication (100),
• l'entrée des données (500) dans le module de classification (200),
• la génération d'au moins une première valeur de confiance (540) par le module de classification (200),
• le stockage de l'au moins une première valeur de confiance (540) dans la mémoire (120) du système de communication (100),
- suite à une demande d'authentification, l'accès à la mémoire (120) du système de communication (100) afin de lire au moins une des premières valeurs de confiance (540) générées et stockées à partir de la mémoire (120),
- la génération de l'au moins un résultat de classification (600) moyennant l'emploi de l'au moins une première valeur de confiance (540).

3. Procédé selon l'une des revendications précédentes, dans lequel les données (500) relatives à l'utilisateur comprennent en outre :
- des données de position du système de communication (100), lesquelles sont détectées par un procédé de détermination de position par un capteur (110) pour la détermination de la position du système de communication (100), et/ou
- des données d'utilisation d'application de l'utilisateur (1) actuel, où les données d'utilisation d'application comprennent des informations concernant une utilisation de programmes d'application par l'utilisateur, et/ou
- des données biométriques de l'utilisateur (1) actuel, lesquelles sont détectées par un capteur (110) pour la détection de données biométriques, et/ou
- de données de connexion du système de communication (100) avec d'autres appareils, et/ou
- des données calendaires et/ou horaires d'une horloge mise en oeuvre dans le système de communication (100) ou d'une horloge externe, dont le signal est reçu par un capteur (110) du système de communication (100), et/ou
- des données de déplacement de motricité fine de l'utilisateur, où les données de déplacement de motricité fine sont détectées au moyen d'un capteur pour la détection de données de déplacement de motricité fine ou au moyen d'un moyen de saisie, où le module de classification (200) est en outre entraîné pour la reconnaissance d'un modèle de déplacement de motricité fine générique à l'aide d'ensembles de données d'entraînement d'une cohorte d'utilisateurs.

4. Procédé selon l'une des revendications précédentes, dans lequel au moins un modèle sous la forme d'une fonction modèle (210) et au moins un ensemble de données de comparaison (220) sont stockés dans la mémoire (120) du système de communication (100),
dans lequel l'ensemble de données de comparaison (220) comprend une multiplicité de données (500) relatives à l'utilisateur, où au moins un premier paramètre de comparaison (230) est calculé à partir de la multiplicité de données (500) relatives à l'utilisateur du premier ensemble de données de comparaison (220),
dans lequel le module de classification (200) exécute, suite à l'entrée des données (500) relatives à l'utilisateur, les étapes suivantes :
- la détermination d'un paramètre de classification pour chaque paramètre que comprennent les données relatives à l'utilisateur, où la détermination des paramètres de classification à partir des données de déplacement de motricité grossière et/ou des données de déplacement de motricité fine comprend une comparaison des données de déplacement de motricité grossière et/ou des données de déplacement de motricité fine détectées avec l'au moins une fonction modèle (210), une association des données (500) relatives à l'utilisateur au premier modèle associé à la fonction modèle (210) et une acquisition d'au moins un paramètre de classification (230) correspondant au premier modèle dans le cas où les données de déplacement peuvent être associées à l'au moins un premier modèle,
- le calcul d'une première valeur de confiance (540) pour chaque paramètre de classification (230) par une comparaison de l'au moins un paramètre de classification (230) avec le paramètre de comparaison (230) correspondant de l'ensemble de données de comparaison (220).

5. Procédé selon l'une des revendications précédentes, dans lequel l'authentification basée sur le comportement comprend en outre l'entraînement du module de classification (200) avec les données (500) relatives à l'utilisateur de l'utilisateur actuel, où le module de classification (200) est entraîné pour le comportement de l'utilisateur actuel moyennant la condition que, selon le résultat de classification (600), l'utilisateur actuel est un (100) utilisateur enregistré, où l'entraînement comprend un ajout de données (500) relatives à l'utilisateur à l'ensemble de données de comparaison, où l'entraînement comprend en outre un retrait des données (500) relatives à l'utilisateur lesquelles dépassent en partie le premier ensemble de données de comparaison (220) et un vieillissement prédéfini, à partir du premier ensemble de données de comparaison.

6. Procédé selon la revendication 5, dans lequel les données relatives à l'utilisateur retirées de l'ensemble de données de comparaison sont stockées dans la mémoire du système de stockage.

7. Procédé selon l'une des revendications précédentes, dans lequel les premières valeurs de confiance (540) sont traitées par le processeur (130) du système de communication (100) portable pour donner une valeur de confiance résultante, où la valeur de confiance résultante indique une probabilité avec laquelle l'identité de l'utilisateur actuel correspond à l'identité de (100) l'utilisateur enregistré.

8. Procédé selon l'une des revendications précédentes, dans lequel les premières valeurs de confiance (540) individuelles des paramètres de classification (520) sont pourvues respectivement d'un facteur de pondération lors de l'évaluation, où les facteurs de pondération sont associés à la première valeur de confiance (540) respective.

9. Procédé selon l'une des revendications précédentes, dans lequel le critère de vérification (800) est satisfait dans le cas où :
- au moins un résultat de classification (600) dépasse une valeur de seuil prédéfinie par le critère de vérification (800), et/ou
- un vieillissement prédéfini par le critère de vérification (800) de l'au moins un résultat de classification (600) n'est pas dépassé.

10. Procédé selon l'une des revendications précédentes, dans lequel plusieurs utilisateurs sont enregistrés sur le système de communication (100) et un résultat de classification (600) est généré pour chaque utilisateur, où le module de classification (200) est conçu pour identifier l'utilisateur actuel en tant que l'un des utilisateurs enregistrés.

11. Procédé selon la revendication 10, dans lequel le module de classification (200) est conçu pour reconnaître un changement d'utilisateur à l'aide d'un déplacement de motricité grossière et/ou de motricité fine,
dans lequel l'authentification basée sur le comportement comprend en outre :
- l'exécution répétée des étapes :
• de génération d'au moins une deuxième valeur de confiance (600) par le module de classification (200),
• le stockage de l'au moins une deuxième valeur de confiance (540) dans la mémoire (120) du système de communication (100),
- suite à une demande d'authentification, l'accès à la mémoire (120) du système de communication (100) afin de lire au moins une des deuxièmes valeurs de confiance (540) stockées, à partir de la mémoire (120),
- l'évaluation de l'au moins une deuxième valeur de confiance (540), afin de vérifier s'il y a eu un changement d'utilisateur,
- le rejet des valeurs de confiance (540) obtenues jusqu'à présent dans le cas où un changement d'utilisateur a eu lieu.

12. Procédé selon l'une des revendications précédentes, dans lequel le système de stockage comprend plusieurs mémoires et un serveur de gestion de fichiers,
dans lequel au moins un fichier a été stocké distribué dans les mémoires du système de stockage à partir du système de communication (100), où le stockage partagé comprend :
- la génération automatique d'un plan de distribution qui contient des instructions pour la génération de fragments de fichier du fichier au moyen d'un procédé de correction d'erreurs et des identificateurs des nombreuses mémoires du système de stockage dans lesquelles les fragments de fichier générés doivent être stockés, par le serveur de gestion de fichiers ou par le système de communication (100),
- l'exécution du procédé de correction d'erreurs spécifié dans le plan de distribution pour la génération des fragments de fichier à partir du fichier, par le système de communication (100,
- l'envoi au serveur de gestion de fichiers du signal d'authentification du système de communication (100) pour le stockage des fragments de fichier dans les nombreuses mémoires du système de stockage identifiées dans le plan de distribution, par le biais d'un réseau,
- en réponse à la réception du signal d'authentification, la demande d'un jeton d'autorisation par le serveur de gestion de fichiers, pourr chacune des nombreuses mémoires du système de mémoire identifiée dans le plan de distribution et la transmission ultérieure au système de communication (100) des jetons d'autorisation obtenus en réponse à la demande par le serveur de gestion de fichiers, et
- le stockage des fragments de fichier générés dans les mémoires du système de stockage par le biais du réseau au moyen d'un certificat d'autorisation par le jeton d'autorisation moyennant le contournement du serveur de gestion de fichiers par le système de communication (100).

13. Procédé selon l'une des revendications précédentes, dans lequel le module de classification est entraîné pour la reconnaissance d'un état critique au moyen des données relatives à l'utilisateur de l'utilisateur,
dans lequel le système de communication (100) présente une interface, où le système de communication (100) est conçu pour communiquer avec un moyen d'authentification particulier par le biais de l'interface, où le propriétaire du moyen d'authentification particulier acquiert un accès particulier au système de stockage (150), où l'acquisition de l'accès particulier comprend les étapes suivantes :
- la reconnaissance d'un état critique de l'utilisateur à l'aide des données relatives à l'utilisateur,
- suite à la reconnaissance de l'état critique de l'utilisateur, l'envoi d'un signal d'authentification particulier au système de stockage (150),
- l'établissement d'une liaison sécurisée par cryptographie entre le moyen d'authentification particulier et le système de communication (100),
- l'authentification du propriétaire du moyen d'authentification particulier,
- l'acquisition de l'accès particulier à la mémoire du système de stockage dans le cas où le système de communication (100) a envoyé un signal d'authentification particulier et où le propriétaire du moyen d'authentification particulier a pu s'authentifier.

14. Système de communication (100) mobile portable permettant l'authentification d'un utilisateur actuel du système de communication (100) vis-à-vis d'un système de stockage (150), comprenant un processeur (130), une interface réseau permettant un couplage opérationnel du système de communication (100) avec le système de stockage (150) par le biais d'un réseau (178), le système de communication (100) comprenant une mémoire (120) interne avec des instructions de programme, où une exécution des instructions de programme par le processeur (130) du système de communication (100) fait en sorte que le système de communication (100) exécute le procédé suivant :
- la génération d'au moins un résultat de classification (600) moyennant l'emploi des données relatives à l'utilisateur pour l'authentification basée sur le comportement,
- l'évaluation de l'au moins un résultat de classification (600) afin d'authentifier l'utilisateur, où l'évaluation comprend une vérification si le résultat de classification (600) satisfait à un critère de vérification (800) prédéfini, où une authentification réussie comprend la satisfaction au critère de vérification,
- la création d'un signal d'authentification suite au résultat de l'évaluation du résultat de classification et l'envoi du signal d'authentification au système de stockage (150),
- l'acquisition de l'accès à la mémoire (152) du système de stockage (150) dans le cas où le signal d'authentification indique une authentification réussie de l'utilisateur,
dans lequel les données (500) relatives à l'utilisateur comprennent des données de déplacement d'un déplacement du système de communication (100), où le déplacement du système de communication (100) est provoqué par un déplacement de motricité grossière et/ou fine de l'utilisateur actuel du système de communication (100) pendant que l'utilisateur transporte l'appareil de communication avec lui,
dans lequel le capteur (110) est conçu pour la détection du déplacement du système de communication (100), où l'authentification basée sur le comportement est effectuée par le système de communication (100), lequel présente en outre un module de classification (200), un processeur (130) et une mémoire (120) interne,
dans lequel le module de classification (200) est conçu pour la classification du comportement de l'utilisateur actuel au moyen des données relatives à l'utilisateur, où le module de classification (200) est en outre entraîné pour la reconnaissance d'un modèle de déplacement générique à l'aide d'ensembles de données d'entraînement d'une cohorte d'utilisateurs, où le module de classification (200) est exécuté par le processeur (130) du système de communication (100),
dans lequel l'authentification basée sur le comportement présente les étapes suivantes :
- l'exécution répétée de la génération d'une valeur de confiance, où la génération de la valeur de confiance comprend les étapes suivantes :
• la détection des données (500) relatives à l'utilisateur par l'au moins un capteur interne (110) du système de communication (100),
• l'entrée des données (500) dans le module de classification (200),
• la génération d'au moins une première valeur de confiance (540) par le module de classification (200),
• le stockage de l'au moins une première valeur de confiance (540) dans la mémoire (120) du système de communication (100),
- suite à une demande d'authentification, l'accès à la mémoire (120) du système de communication (100) afin de lire au moins une des premières valeurs de confiance (540) générées et stockées à partir de la mémoire (120),
la génération de l'au moins un résultat de classification (600) moyennant l'emploi de l'au moins une première valeur de confiance (540).

15. Système comprenant un système de communication (100) mobile selon la revendication 14 et un système de stockage (150), où le système est conçu pour l'authentification d'un utilisateur actuel du système de communication (100) vis-à-vis d'un système de stockage (150), où le système de stockage (150) comprend au moins une mémoire (152), où la mémoire (152) est conçue pour stocker des fichiers que reçoit le système de stockage (150) à partir du système de communication (100).
